# EUROPEAN PATENT SPECIFICATION

(11) **EP 1 282 356 B1**
(45) Date of publication and mention of the grant of the patent: **21.01.2004**
(21) Application number: 01932398.9
(22) Date of filing: 17.05.2001
(51) Int. Cl.: A01N 63/00, A01N 43/60, A01G 31/00

(54) **MINERAL WOOL PLANT SUBSTRATE**
PFLANZENSUBSTRAT AUS MINERALWOLLE
SUBSTRAT EN LAINE MINERALE DESTINE A DES PLANTES

(30) Priority: 17.05.2000 EP 00201745
(43) Date of publication of application: 12.02.2003
(73) Proprietor: Rockwool International A/S, 2640 Hedehusene (DK)
(72) Inventor: KUIPER, Daan, NL-6011 ST Ell (NL); LUGTENBERG, Egbertus, Johannes, Josephus, NL-2317 NG Leiden (NL); CHIN-A-WOENG, Thomas, Fong, Cheong, NL-3061 ET Rotterdam (NL); BLOEMBERG, Guido, Vincent, NL-2235 SP Voorschoten (NL)
(74) Representative: De Hoop, Eric
(86) International application number: PCT/NL2001/000369
(87) International publication number: WO 2001/087070

(56) References cited:
- EP-A- 0 823 202
- EP-A- 0 933 021
- EP-A- 0 980 647
- WO-A-92/12623
- WO-A-95/28085
- CHIN-A-WOENG THOMAS F C ET AL: "Biocontrol by phenazine-1-carboxamide-producing Pseudomonas chlororaphis PCL1391 of tomato root rot caused by Fusarium oxysporum f. sp. radicis-lycopersici." MOLECULAR PLANT-MICROBE INTERACTIONS, vol. 11, no. 11, November 1998 (1998-11), pages 1069-1077, XP000965783 ISSN: 0894-0282
- HAAS DIETER: "Biological control of plant diseases by bacteria." MEDEDELINGEN FACULTEIT LANDBOUWKUNDIGE EN TOEGEPASTE BIOLOGISCHE, vol. 61, no. 2A, 1996, pages 195-198, XP000972358 1996
- G. SIERRA ET AL.: "Effect of Oxy-chlororaphin on the Growth in vitro of Streptomyces Species and Some Pathogenic Fungi" NATURE, vol. 182, no. 4630, 26 July 1958 (1958-07-26), page 265 XP002155612 LONDON, GB
- DATABASE WPI Section Ch, Week 199351 Derwent Publications Ltd., London, GB; Class C05, AN 1993-410750 XP002153076 & JP 05 310521 A (NORINSHO KK), 22 November 1993 (1993-11-22)
- CHANG, P. C. ET AL: "Simultaneous biosynthesis of pyocyanine, phenazine-1-carboxylic acid, and oxychlororaphine from labeled substrates by Pseudomonas aeruginosa Mac 436" CAN. J. BIOCHEM. (1968), 46(8), 925-9, XP000972390
- VAN PEER R ET AL: "CONTROL OF FUSARIUM WILT IN CARNATION GROWN ON ROCKWOOL BY PSEUDOMONAS-SP STRAIN WCS417R AND BY IRON EDDHA" NETHERLANDS JOURNAL OF PLANT PATHOLOGY, vol. 96, no. 3, 1990, pages 119-132, XP001014776 ISSN: 0028-2944
- DUFFY BRION K ET AL: "Zinc improves biocontrol of fusarium crown and root rot of tomato by Pseudomonas fluorescens and represses the production of pathogen metabolites inhibitory to bacterial antibiotic biosynthesis." PHYTOPATHOLOGY, vol. 87, no. 12, December 1997 (1997-12), pages 1250-1257, XP001015239 ISSN: 0031-949X
- DATABASE BIOSIS [Online] BIOSCIENCES INFORMATION SERVICE, PHILADELPHIA, PA, US; 1996 MCCULLAGH M ET AL: "Evaluation of plant growth-promoting rhizobacteria for biological control of pythium root rot of cucumbers grown in rockwool and effects on yield." Database accession no. PREV199699264904 XP002153072 & EUROPEAN JOURNAL OF PLANT PATHOLOGY, vol. 102, no. 8, 1996, pages 747-755, ISSN: 0929-1873
- ALABOUVETTE C ET AL: "RECENT ADVANCES IN THE BIOLOGICAL CONTROL OF FUSARIUM WILTS*" PESTICIDE SCIENCE,GB,ELSEVIER APPLIED SCIENCE PUBLISHER. BARKING, vol. 37, no. 4, 1993, pages 365-373, XP000385373 ISSN: 0031-613X
- DATABASE WPI Section Ch, Week 199211 Derwent Publications Ltd., London, GB; Class C04, AN 1992-084737 XP002153077 & JP 04 027317 A (KIMURA KENKYUSHO KK), 30 January 1992 (1992-01-30)
- DATABASE BIOSIS [Online] BIOSCIENCES INFORMATION SERVICE, PHILADELPHIA, PA, US; 1990 MIHUTA-GRIMM L ET AL: "FUSARIUM CROWN AND ROOT ROT OF TOMATO IN GREENHOUSE ROCK WOOL SYSTEMS SOURCES OF INOCULUM AND DISEASE MANAGEMENT WITH BENOMYL" Database accession no. PREV199191043460 XP002153073 & PLANT DISEASE, vol. 74, no. 12, 1990, pages 996-1002, ISSN: 0191-2917
- ANJAIAH V ET AL: "Biocontrol of Fusarium wilt and Pythium damping-off by the metabolises of P. aeruginosa PNA1 and its TN5-derivatives: Phenazines and anthranilate." MEDEDELINGEN FACULTEIT LANDBOUWKUNDIGE EN TOEGEPASTE BIOLOGISCHE, vol. 63, no. 4B, 1998, pages 1671-1678, XP000965192 1998
- DATABASE BIOSIS [Online] BIOSCIENCES INFORMATION SERVICE, PHILADELPHIA, PA, US; 1996 STEAD PAUL ET AL: "Induction of phenazine biosynthesis in cultures of Pseudomonas aeruginosa by L-N-(3-oxohexanoyl)homoserine lactone." Database accession no. PREV199699093583 XP002153075 & FEMS MICROBIOLOGY LETTERS, vol. 140, no. 1, 1996, pages 15-22, ISSN: 0378-1097
- DATABASE BIOSIS [Online] BIOSCIENCES INFORMATION SERVICE, PHILADELPHIA, PA, US; 1985 SPANGLER R ET AL: "COLICIN SYNTHESIS AND CELL DEATH" Database accession no. PREV198580080493 XP002153105 & JOURNAL OF BACTERIOLOGY, vol. 163, no. 1, 1985, pages 167-173, ISSN: 0021-9193
- DATABASE BIOSIS [Online] BIOSCIENCES INFORMATION SERVICE, PHILADELPHIA, PA, US; 1983 KRUEGER J H ET AL: "ISOLATION AND CHARACTERIZATION OF TN-5 INSERTION MUTATIONS IN THE LEX-A GENE OF ESCHERICHIA-COLI" Database accession no. PREV198376048861 XP002153106 & JOURNAL OF BACTERIOLOGY, vol. 153, no. 3, 1983, pages 1368-1378, ISSN: 0021-9193
- DATABASE BIOSIS [Online] BIOSCIENCES INFORMATION SERVICE, PHILADELPHIA, PA, US; 1996 KAWASHIMA HIDEKI ET AL: "Formation of 5,10-dihydrophenazine from phenazine by Pseudomonas cepacia IFO 15124 at low oxygen tensions." Database accession no. PREV199699198633 XP002153107 & BIOSCIENCE BIOTECHNOLOGY AND BIOCHEMISTRY, vol. 60, no. 7, 1996, pages 1186-1187, ISSN: 0916-8451
- DATABASE BIOSIS [Online] BIOSCIENCES INFORMATION SERVICE, PHILADELPHIA, PA, US; 1994 CASTRIC PETER: "Influence of oxygen on the Pseudomonas aeruginosa hydrogen cyanide synthase." Database accession no. PREV199497333135 XP002153108 & CURRENT MICROBIOLOGY, vol. 29, no. 1, 1994, pages 19-21, ISSN: 0343-8651
- KANNER D ET AL: "PATTERN OF PHENAZINE PIGMENT PRODUCTION BY A STRAIN OF PSEUDOMONAS-AERUGINOSA" JOURNAL OF BACTERIOLOGY, vol. 134, no. 2, 1978, pages 690-692, XP000965232 EN ISSN: 0021-9193

## Description

The present invention relates to a mineral wool plant substrate, more in particular to a mineral wool plant substrate comprising a foreign material or materials in order to improve the properties of the mineral.wool substrate to realize Crop Protection and/or improve plant performance.

Under mineral wool is to be understood glass wool, stone wool, rock wool, man made vitrous fibres, slag wool, and/or mixtures thereof.

Mineral wool plant substrates for plant growth are well-known in the art and may consist of a coherent matrix of mineral wool, and may be either in loose or in granular form. Mineral wool substrates consisting of a coherent matrix of mineral wool are preferred.

In case a mineral wool substrate consisting of a coherent matrix of mineral wool is desired, such coherent matrix is formed by collecting a layer of mineral wool fibres provided with a curable binder, so that after curing the mineral wool fibres are substantially not displaceable relative to one another. If required for fast uptake of water this coherent matrix of mineral wool may be provided with a wetting agent.

The fibres may have an average diameter varying in between 1-10 *µ*m. For rock wool the fibre diameter is on average about 4 *µ*m.

The density of the coherent matrix of mineral wool may be between 10-200 kg/m³, in general in the range of 40-80 kg/m³.

Such a coherent matrix of mineral wool has a form retaining property, which is inherent due to the inorganic starting materials used. Furthermore, the water retaining capacity of these mineral wool plant substrates is very well controllable and predictable.

Growers when utilizing mineral wool plant substrates will have to apply pesticides if disease symptoms have been observed. A problem is that continuous observations are necessary and that sometimes the application of pesticide is too late.

An object of the present invention is to provide an improved mineral wool plant substrate, which aims to overcome this problem.

According to the invention there is provided a mineral wool plant substrate according to claim 1.

The biologically active additive may be any substance with action against pathogenic fungi, which has a favourable effect on plants by providing improved growth conditions or by combatting diseases caused by fungi. The biologically active additive may be a natural or a synthetic substance.

From the group of substances with action against pathogenic fungi which comprises a great variety of different species, the phenazines are particularly preferred. Many phenazine derivatives and their syntheses are known. Many phenazines have antibiotic activity, and especially antifungus activity. For example, phenazine-1-carboxamide (PCN) shows a strong growth inhibiting effect on many phytopathogenic fungi, including *Fusarium, Rhizoctonia, Pythium, Botrytis, Verticillium* and *Alternaria*, and on some bacteria, especially grampositive bacteria.

For example, phenazine-1-carboxamide efficiently controls tomato foot and root rot caused by *Fusarium oxysporum* f.sp. *radicis lycopersici.* Phenazine-1-carboxamide has a strong growth inhibiting effect in a wide pH range, tested between pH 3.1 and 7.0. PCN also efficiently controls post- and pre-emergence damping-off (e.g. of tomato) caused by *Pythium.*

In a further aspect of the invention the mineral wool plant substrate comprises bound to the mineral wool a microorganism producing a biologically active additive as defined above.

In particular the microorganism is a fungicide producing bacterium. A plurality of bacterial species produces fungicidal substances. Illustrative examples are *Pseudomonas* spp., *Streptomyces* spp., *Microbispora* spp., *Brevibacterium* spp., *Streptosporangium* spp., *Sorangium* spp., etc. The fungicidal activity is due to the production of various compounds, including phenazine derivatives. Preferably a microorganism is selected which has good root colonisation properties and/or good mineral wool colonisation properties. The inventors have found that root colonisation and mineral wool colonisation play an important role in biocontrol, presumably by providing a delivery system for antifungal compounds. Moreover, a microorganism showing good root colonisation properties and/or good mineral wool colonisation properties will adhere and remain to the roots when plants are transferred to fresh substrates.

A microorganism which very efficiently controls fungus and bacteria diseases is *Pseudomonas chlororaphis* PCL1391. The fungicidal activity appears to be due to the production of various compounds of which phenazine-1-carboxamide is the most important one. *P. chlororaphis* strain PCL1391 has been deposited under No. CBS 102790 on 16 May 2000 at the Centraalbureau Schimmelcultures in Baarn, NL.

PCL1391 appeared to be an efficient colonizer of tomato roots and an excellent biocontrol strain in an *F. oxysporum*/tomato test system.

In a further aspect the inventors have found genetic modifications of *P. chlororaphis* PCL1391 which result in overproduction of phenazine-1-carboxamide. Accordingly, such genetically transformed *P.chlororaphis* PCL1391 are preferably used in the present invention.
a. Production of phenazine-1-carboxamide in *P*. *chlororaphis* PCL1391 is under control of quorum sensing, in which acyl homoserine lactones (AHLs) play an essential role as inducer molecules. The phenazine biosynthetic operon (*phz*) comprises various phenazine biosynthetic genes *(phzA, phzB,* etc.) and regulatory genes *(phzR* and *phzI).* It has been shown that multiple copies of the genes *phzR* and *phzI,* which results in an overproduction of AHLs, results in a 3-fold overproduction of phenazine-1-carboxamide. It is contemplated that also in general bacteria can be genetically modified such that they comprise multiple copies of genes phzR and *phzI* resulting in an overproduction of antibiotic.
b. Also a mutation in the lexa gene of PCL1391 results in overproduction of AHLs and causes a 10-fold overproduction of phenazine-1-carboxamide by PCL1391. The *lexA* gene of PCL1391 is a gene that is homologous to the *lexA* gene of *P. aeruginosa.* The inventors are the first who have found that LexA is involved in regulation of antibiotic production.

When using the substrate of the invention wherein *P. chlororaphis* PCL1391 is bound to the mineral wool, the production of PCN can be increased by employing the following conditions:
- growth under low oxygen,
- the presence of glycerol, fructose, ribose or citric acid in the nutrient medium, and
- the presence of various minerals (Cu²⁺, Zn²⁺, Fe³⁺) in the nutrient medium.

Evidently, these factors increase the expression of the PCN biosynthetic genes.

This invention also contemplates the overproduction of phenazine derivatives by employing a combination of two or more of the above measures, i.e. multiple copies of the genes *phzR* and *phzI,* mutation in the *lexA* gene, and nutrient medium conditions.

Mineral wool plant substrates are generally produced by curing mineral wool fibres provided with a curable binder, resulting in a coherent matrix of mineral wool. The mineral wool plant substrate of the invention consisting of a coherent matrix of mineral wool can be produced by various methods.

Having produced the mineral wool plant substrate consisting of a coherent matrix of mineral wool, said substrate may be granulated. According to the invention a mineral wool plant substrate, wherein the mineral wool is in granular form, can also be used.

Further, other mineral wool plant substrates which can be used according to the invention are mineral wool substrates which do not consist of a coherent matrix of mineral wool. In that case a curable binder is not used in producing the mineral wool plant substrate. Such substrates may be either in loose or in granular form.

In one aspect of the invention, the biologically active additive or the microorganism producing said additive is added directly during production of the mineral wool substrate.

Accordingly, the invention further provides a process for producing a mineral wool plant substrate of the invention, wherein the additive or the microorganism producing said additive is added to the mineral wool plant substrate during production of said substrate.

In a preferred embodiment the additive or the microorganism producing said additive is admixed to mineral wool fibres and a curable binder to form a mixture, and said mixture is cured to form a coherent matrix.

In such embodiment the microorganism should be thermo-resistant to a certain degree depending on the actual curing temperature and curing time used. The higher said curing temperature and the longer said curing time, the more thermo-resistant the microorganism should be. In a particular preparation of the mineral wool plant substrate of the invention, the microorganism should for example survive 2 minutes of 230°C maximum.

Thermo-resistent microorganisms such as described above, are known from prior art [see J.W. Kloepper, 1993, 'Plant growth promoting rhizobacteria as biological control agents', in 'Soil Microbial Ecology - Applications in Agricultural and Environmental Management', ed. F.B. Metting, Jr., pp. 255-274 (Marcel Dekker, Inc., New York); and General Microbiology, 1995, by R.Y. Stanier, M. Doudoroff & E.A. Adelberg, Macmillan Student Editions].

Besides the choice for a specific species of microorganism having a certain degree of thermo-resistance, a choice need to be made for the life cycle form of the microorganism. For example, micro-spores or dried bacteria have a significant higher thermo-resistance than other life cycle forms.

In another aspect of the invention, the additive or the microorganism producing said additive is added to a finished mineral wool plant substrate, thus after production of the mineral wool substrate.

Accordingly, the invention further provides a process for producing a mineral wool plant substrate of the invention, wherein the additive or the microorganism producing said additive is added to a finished mineral wool plant substrate.

Such finished mineral wool plant substrate may be a cured mineral wool substrate consisting of a coherent matrix of mineral wool, which is either granulated or not, or it may be a mineral wool substrate which does not consist of a coherent matrix of mineral wool and which is either in loose or in granular form.

In case the additive or the microorganism producing said additive is added to the mineral wool plant substrate during production of said substrate, some things have to be taken into consideration.

One of these relates to the period between production of the mineral wool plant substrate, during which production the microorganism is added, and the actual use of the mineral wool substrate for growing plants. During said period the mineral wool substrate may for example have to be stored and transported. For example, the microorganism within the mineral wool plant substrate needs to survive a period of six weeks after production of said substrate which period covers a conventional time period of storing and transporting.

Such survival depends on the type of life cycle form of the microorganism and/or on the presence of any nutrition source in the mineral wool substrate and/or any possible dryness within the mineral wool substrate.

For example, when micro-spores or dried bacteria are used such microorganisms may survive a longer period without any nutrition source than microorganisms which are present in other life cycle forms. A further example is a microorganism which is able to withstand relatively long periods of dryness.

Optionally, a nutrition source may be added to the mineral wool substrate during the production of said substrate, i.e. together with the microorganism itself. For example, such source may be a mixture comprising inorganic as well as organic material, and comprising the microorganism to be added.

Such mixture would serve several purposes. First of all, such mixture functions as a food reservoir for'the microorganism, because of the presence of organic material.

Further, such mixture functions as a good habitat for the microorganism. A good habitat for microorganisms is available in materials containing pores with an average size of 6 µm or less. Very good conditions are provided when the pores are smaller than 3 times the size of the microorganisms, yet still larger than the organisms. Clay (such as Bentonite) is an example of a material containing an average pore size < 6 µm. The porosity and average pore size of clay is not static but fluctuates considerably due to the swell and shrink behaviour of clay, which is influenced, amongst other things by the pH-level, EC-level and water content.

Still further, such mixture functions as a heat shield for the microorganism. This is especially advantageous in case a mineral wool substrate consisting of a coherent matrix of mineral wool is produced, in that the influence of the normally high curing temperature used in the production of such substrate on the microorganism is lessened.

An example of a mixture meeting the above-mentioned purposes, is a mixture of clay (such as Bentonite) elements comprising inorganic and organic material and comprising the microorganism. Applicant has found that such clay elements, having been added to a mixture of mineral wool fibres and a curable binder before curing these fibers, reach lower top temperatures during curing than the mineral wool matrix which is formed upon said curing. By this the microorganism contained in the clay elements is shielded from the relatively high curing temperature to a great extent.

In addition, pharmaceutical and water soluble capsules can act as a transitory habitat for microorganisms during production of the mineral wool plant substrate.

Depending on the life cycle form of the microorganism (e.g. micro-spores or dried bacteria), the microorganism may have to be activated/germinated after installation of the mineral wool substrate at a grower's location. Such activation may be achieved by the normal initial wetting.

Having activated the microorganism nutrition for the microorganism should be available to support its normal processes, till root derived organic material can act as nutrition source for the microorganism. During the period in which there is not sufficient root derived organic material, a nutrition source should be added. However, it is also possible that in case a nutrition source has been added to the mineral wool substrate during the production of said substrate, said nutrition source functions as a nutrition source during the period commencing immediately after the activation of the microorganism.

When in adding a microorganism, producing a biologically active additive with action against pathogenic fungi, to a mineral wool plant substrate, either during production of said substrate or afterwards, one or more of the above measures are taken, a mineral wool plant substrate of the invention can be prepared in which the microorganism is bound to the mineral wool in a form suitable to be used for combatting pathogenic fungi, when said mineral wool substrate is used for growing plants.

### Example

In this Example *Pseudomonas chlororaphis* PCL1391 was added to a finished (i.e. cured) rock wool plant substrate consisting of a coherent matrix of rock wool (hereinafter referred to as 'rock wool substrate no. 1'), and to a rock wool substrate which was identical to rock wool substrate no. 1 but which had been granulated (hereinafter referred to as 'rock wool substrate no. 2'), both types of rock wool substrates being described in the description preceding this Example.

The objectives of this Example are to determine colonisation by *Pseudomonas chlororaphis* PCL1391 of the root system of a cucumber plant and of rock wool substrates no. 1 and no. 2, and to determine production of phenazine-1-carboxamide by *P. chlororaphis* PCL1391 in rock wool substrates no. 1 and no. 2.

*P. chlororaphis* PCL 1391 was isolated from the root system of tomato plants grown in a commercial field in Andalusia, Spain. The strain protects tomato plants against foot and root rot caused by *Fusarium oxysporum*. f.sp. *radicis-lycopersici.* The strain also inhibits growth of other plant pathogens including *Rhizoctonia solani, Pythium ultimum, Botrytis cinerea,* and *Gaeumannomyces graminis.* The antifungal compound responsible for the antifungal activity *w*as identified as phenazine-1-carboxamide.

### Materials and methods

### Strains used

The wild-type strain *P. chlororaphis* PCL1391 was used for inoculation of cucumber nutrient solution. The production of the antifungal compound phenazine-1-carboxamide enables this strain to inhibit growth of a number of plant-pathogenic fungi. To be able to track this strain on the root system and in nutrient solution PCL1392 was also used. PCL1392 is a random transposon Tn*5lacZ-*marked derivative of wild-type PCL1391 with constitutive *lacZ* expression [see R. Simon et al., 'A broad host range mobilization system for *in vivo* genetic engineering: transposon mutagenesis in Gram negative bacteria', Biotechnology, 1983, 1:784-791; and T.F.C. Chin-A-Woeng et al., 'Root colonization by phenazine-1-carboxamide-producing bacterium *Pseu-domonas chlororaphis* PCL1391 is essential for biocontrol of tomato foot and root rot', Mol. Plant-Microbe Interact., 2000, 13:1340-1345].

### Seeds and growth conditions

The nutrient solution for growth of cucumber was prepared according to a protocol provided by Rockwool/Grodan. The composition of said nutrient solution is given in Table A. The values achieved in the root environment by using said nutrient solution are also shown in Table A. Cucumber Euphoria RZ seeds were provided by Rockwool/Grodan. Tomato seeds cv. Carmello were from Novartis Seeds B.V.

**Table A**

| Composition of nutrient solution for growth of cucumber | | |
|---|---|---|
| **Element** | **Standard nutrient solution** | **Values achieved in root environment** |
| EC (mS/cm) | 2.4 | 2.5 |
| pH | | 5.5 |
| NH₄ (mmol/l) | 1.25 | 0.1 |
| K | 6.75 | 6.5 |
| Na | | <5 |
| Ca | 4.5 | 6.0 |
| Mg | 3.0 | 3.0 |
| NO₃ | 16.75 | 18.0 |
| Cl | | <5 |
| SO₄ | 2.5 | 2.5 |
| HCO₃ | | < 1 |
| H₂PO₄ | 1.25 | 1.5 |
| Fe (µmol/l) | 25 | 35 |
| Mn | 10 | 5 |
| Zn | 5 | 7 |
| B | 35 | 50 |
| Cu | 1.0 | 0.7 |
| Mo | 0.5 | 0.5 |

The initial experiments were performed in both rock wool substrate no. 1 and rock wool substrate no. 2.

One cucumber seed was sown per pot and the pots were covered with a layer of vermiculite. The setup was placed in a growth container and seedlings were grown at 23°C in a growth chamber (70% relative humidity, 16/8 hours day/night cycles) for 12-14 days.

### Inoculation of nutrient solution

Bacteria were added to the cucumber nutrient solution to a final concentration of 2 × 10⁶ CFU/ml. The solution was then used to wet the rock wool substrate. Plants were watered from the bottom.

### Determination of bacterial numbers

Bacterial numbers were determined by dilution plating on King's medium B and expressed in log colony forming units/ml (log₁₀ CFU/ml). Bacterial numbers on the root system were determined by taking 1 cm root parts, shaking them in 1.0 ml phosphate buffered saline (PBS) using an Eppendorf shaker, followed by dilution plating. Numbers on the root are expressed in log₁₀ CFU/cm of root.

### Extraction and detection of phenazine-1-carboxamide from the rock wool substrate

Phenazine-1-carboxamide was extracted from the rock wool substrate and nutrient solution with one volume of toluene as nutrient solution. The toluene phase was removed by evaporation and the residue was dissolved in 2 ml 50% acetonitrile. A volume of 50 µl of the sample was analysed using HPLC.

### Results

### Growth of cucumber and tomato

Both cucumber and tomato grow well in the experimental setup described above.

The main root can be isolated reasonably intact from either rock wool substrate no. 1 or rock wool substrate no. 2. This made it possible to determine the number of bacteria present on various parts of the main root.

For comparison, tomato seedlings did not grow optimally in the current setup and the root system cannot be removed for examination since it was too fragile.

### Detection of P. chlororaphis PCL1391 (PCL1392) on the cucumber root and on the rock wool substrate

Since the experimental setup is not an axenic system, it was not surprising that contamination by other bacteria was observed after dilution plating of root sections or of nutrient solution. To discriminate PCL1391 from the resident bacteria PCL1392, a Tn*5lacZ*-tagged derivative of PCL1391, was used for monitoring the experiments.

### Effect of inoculation on the colonisation of PCL1391 (PCL1392)

To study the distribution of bacteria on the cucumber root system and nutrient solution, 1 cm root sections at the base of the main root, in the middle of the root, and root tip of the cucumber seedlings were removed and the number of bacteria was determined. Samples were also taken from the nutrient solution after growth (see Table B).

**Table B**

| Bacterial numbers on the main root system of cucumber seedlings and nutrient solution after 14 days of growth | |
|---|---|
| **Root part** (no. of tested plants = 8) | **Number of bacteria** |
| Base | 6.6 ± 0.32 log₁₀ CFU/cm |
| Middle | 6.4 ± 0.46 log₁₀ CFU/cm |
| Tip | 6.1 ± 0.80 log₁₀ CFU/cm |
| **Nutrient solution** (no. of tested solutions = 2) | 6.1 log₁₀ CFU/ml |

There is no significant increase in bacterial numbers on the root system when the system is inoculated for the second time (with the same number of bacteria provided together in 500 ml nutrient solution) after one week of growth.

### Effect of inoculation of P. chlororaphis PCL1391 (PCL1392) on plant growth

The growth of the cucumber seedlings was evaluated by determining plant mass of the seedlings without root system. After 14 days, the average biomass of a seedling grown in non-inoculated nutrient solution was 0.73 ± 0.15 g and of a seedling grown in the presence of strain PCL1392 1.04 ± 0.24 g (no. of tested plants = 30).

### Phenazine-1-carboxamide production in the rock wool substrate

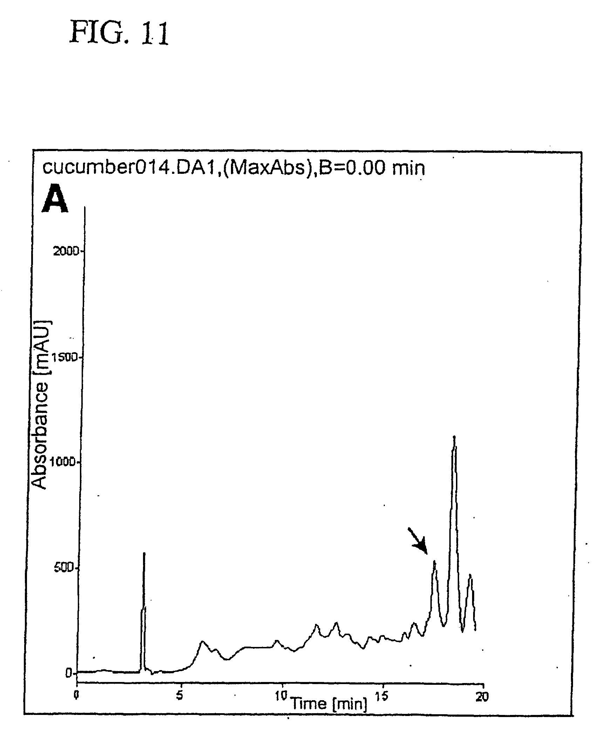

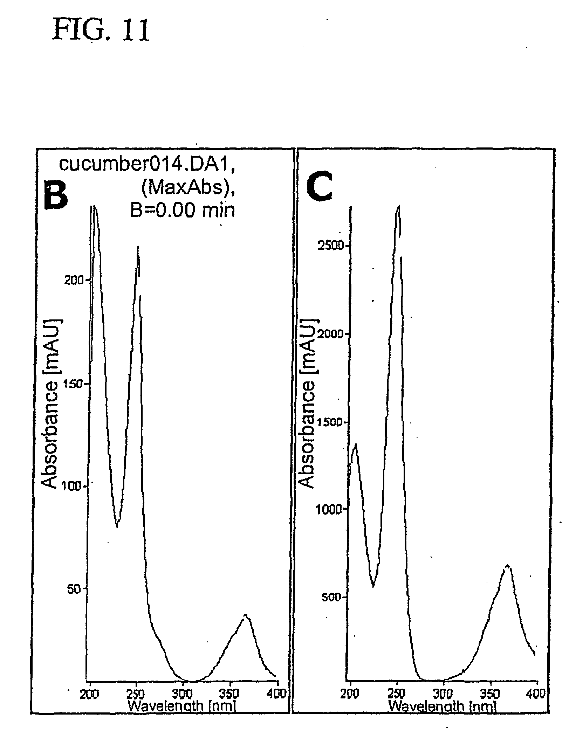

HPLC analysis of toluene extracts of both the nutrient solution and the rock wool substrates no. 1 and no. 2, which substrates contained the root system of a cucumber seedling (total number of tested cucumber seedlings = 40), showed a compound eluting with a retention time of approximately 16 minutes (see Fig. 11A). The spectrum and retention time of this compound (see Fig. 11B) was identical to that of standard phenazine-1-carboxamide (see Fig. 11C). Both spectra show absorbance maxima at 251. and 370 nm, which is characteristic for phenazine-1-carboxamide (see 'High performance liquid chromatographic analysis of *Pseudomonas aeruginosa* phenazines', *J*. *Chromatogr.A,* R.O. Fernandez and R.A. Pizarro, 1977, 771.(1-2): 99-104).

The above data show that the compound in the nutrient solution and in the rock wool of the rock wool substrates no. 1 and no. 2 is indeed phenazine-1-carboxamide.

The amount of phenazine-1-carboxamide produced was quantified using a calibration curve plotted from known concentrations of phenazine-1-carboxamide: The amount calculated to be produced in the nutrient solution in which cucumber seedlings were grown was 0.2 mg/l. HPLC analysis of extracts of a not inoculated control experiment did not indicate the presence of phenazine-1-carboxamide.

### Conclusions

The number of *P*. *chlororaphis* PCL1391 (PCL1392) bacteria in the rock wool substrates no. 1 and no. 2 remains at least stable up to 14 days after inoculation (longer testing periods were not used in the Example).

The root system, including newly grown root parts, of the plants tested is well-colonised by said bacteria and most viable bacteria are attached to the root, which indicates that said bacteria survive in the rock wool substrates no. 1 and no. 2 and propagate themselves.

Said bacteria produce phenazine-1-carboxamide under the growth conditions tested, which compound stimulates the growth of the plants tested (with about 30% with respect to the control).

These results show that phenazine-1-carboxamide (and therefore also the bacterium strain producing it) is bound to the rock wool in the rock wool substrates no. 1 and no. 2.

Because the bacterium strain producing phenazine-1-carboxamide is bound to the rock wool, more precise dosages of said bacterium strain may be administered. Further, since said bacterium strain is bound to the rock wool, it is more easy to combine said bacterium strain with an initial nutrition source, which may also be added to the rock wool before using the rock wool substrate as a plant substrate. Further, there is an opportunity for activating the dried bacterium strain, bound to the rock wool, in a controlled manner.

Hereinafter examples, comprising 'Experimental procedures' and 'Results', are given on genetically modified microorganisms, e.g. those genetically modified microorganisms as described above in the part of the description preceding the above Example. Applicant has found that these genetically modified microorganisms can well be used in the above Example, instead of the wild-type strain *P. chlororaphis* PCL1391, and that with these genetically modified microorganisms even better growing results are obtained.

### Experimental procedures

### Micro-organisms and media

The bacterial strains and plasmids used are listed in Table 1. King's medium B (KB) (King et al. 1954) was used for routinely culturing of *Pseudomonas* strains. *E. coli* and the *Chromobacterium violaceum* were grown in Luria-Bertani (LB) medium (Sambrook et al. 1989). *Agrobacterium tumefaciens* was grown on YMB medium (Smit et al. 1987). Solid growth. media contained 1.8% agar (Difco Laboratories, Detroit, MI, USA). Kanamycin (50 µg/ml), tetracycline (80 µg/ml), chloramphenicol (20 µg/ml), and carbenicillin (50 µg/ml) were added for antibiotic selection where applicable.

### DNA modifications

Digestions with restriction endonucleases, ligation, and transformation of *E. coli* cells with plasmid DNA were performed using standard molecular biological protocols (Sambrook et al. 1989). Nucleotide sequencing was performed by Eurogentec B.V. (Herstal, Belgium) using AB1377-based fluorescent sequencing technology. Computer analysis of protein and nucleotide sequences was achieved with the Wisconsin Package version 10.0. (Genetics Computer Group (GCG), Madison, WI, USA).

### Bioassays for autoinducer activity

For detection of autoinducer activity with the *Chromobacterium violaceum N-*AHL reporter assay (Milton et al. 1997), overnight cultures of *Chromobacterium* were grown in LB medium supplemented with kanamycin (50 µg/ml). LB agar plates were overlaid with a 0.8% LB top agar layer mixed with a .16-h culture of the *Chromobacterium* CV026 indicator strain (200 µl/ml) (McClean et al. 1997). A volume of 20 µl of a 100 µl HPLC sample was tested for autoinducer activity in wells punched into the agar. The activity of fractions was judged after 16 h of growth at 28°C by the appearance of a violet halo around the well. caused by violascein production as a result of activation of the reporter genes in the *Chromobacterium* strain. Autoinducer activity on C18 thin layer chromatography (TLC) (Merck, Darmstadt, Germany), developed in methanol-water (60/40, vol/vol), was detected by overlaying the TLC plate with a 0.8% LB top agar layer containing CV026 cells as described above, followed by incubation at 28°C for 16 h and analysed for the appearance of'violet spots.

Autoinducer indicator assays based on the *Photobacterium (lux)* system using plasmid pSB401 (Winson et al. 1998) and the *P. aeruginosa* elastase *(las)* system using plasmid pSB1142 (T. Perehinec, Division of Food Sciences, Univ. of Nottingham, pers. comm.) were conducted similarly to the assay described above for *Chromobacterium.* A volume of 50 µl of a 16-h culture of DH5α[pSB401] or DH5α[pSB1142] was mixed with 3.0 ml 0.8% LB top agar and poured onto LB agar plates containing chloramphenicol (20 µg/ml). A volume of 20 µl of a sample was placed in the wells and the plates were incubated for 16 h at 28°C. Luminescence was detected by placing a photographic film (Fuji RX, Tokyo, Japan) against the bottom of the. assay plates.

The induction of the *Agrobacterium tra* system was detected using *A. tumefaciens* strain NT1 harbouring plasmid pJM749 containing a *lacZ* reporter fused to a *tra* gene the expression of which is dependent on TraR (located on plasmid pSVB33) and the presence of a sufficient concentration of an autoinducer (Piper et al. 1993). *Agrobacterium* was scraped from YMB plates three days after streaking and resuspended in sterile water to an optical density (OD₆₂₀) of 0.1. A volume of 100 µl of the bacterial suspension was mixed with 3.0 ml of top agar and poured onto YMB plates containing 5-bromo-4-chloro-3-indolyl-β-galactopyranoside (X-Gal) to detect expression as blue pigmentation. Samples were tested as described above for the *Chromobacterium* bioassay. Blue zones were visible after 24-48 h of incubation at 28°C.

### Purification of autoinducers

For the isolation of autoinducer activity, three volumes of dichloromethane were added to seven volumes of supernatant of a 72-h KB culture of PCL1119 and shaken for one hour (120 rpm) Following extraction, the organic phase was removed and dried by evaporation in vacuo (McClean et al. 1997). Crude supernatant extracts were redissolved in 100 µl 100% acetonitrile and fractionated using either C18 TLC or high performance liquid chromatography (HPLC). C18-TLC plates (Merck, Darmstadt, Germany) were developed in a solvent mixture of methanol-water (60:40, vol/vol). After development, the plates were dried and overlaid with a top agar layer containing one of the indicator strains and incubated for 16 h at 28°C. HPLC was performed using an Alltech Hypersil ODS 5 µm 250 x 4.6 mm column (Alltech Associates, Inc, Deerfield, IL, USA) and a linear 20 to 90% (vol/vol) gradient of acetonitrile in water and a flow rate of 1 ml/min. After selecting active fractions, samples were pooled and reapplied to the column and eluting with an isocratic gradient of 35% acetonitrile. UV detection was performed using a Pharmacia RSD 2140 diode array detector (Pharmacia, Uppsala, Sweden) with wave-length scanning from 190 to 400 nm, and 1.0 ml fractions were collected and analysed for the presence of autoinducer activity using the *Chromobacterium* biosensor. Finally, active fractions were pooled for mass spectrometry analyses.

### Nanoelectrospray quadrupole time-of-flight mass spectrometric analysis

Electrospray collision-induced dissociation tandem mass spectra were obtained on a Micromass Q-TOF hybrid quadrupole Time-of-Flight tandem mass spectrometer (Wythenshawe, (UK)) 'equipped with a Z-Spray sample introduction system in a nanoflow electrospray ion source. The mass spectrometer was operated in the positive ion mode. The cone voltage was set at approximately 25 V and a capillary voltage of 1.5 kV was used. Argon was used as the'collision gas and the spectra were obtained using a collision energy of 10 eV. Spectra were acquired via the Tof analyzer and were integrated every 2.4 seconds over the *m*/*z* 35-250 range. Data were recorded and processed using the MassLynx software, version 3.1. Mass calibration was performed by multiple ion monitoring of singly-charged sodium and caesium iodide signals. The samples were 'dissolved in 10 µl methanol, 3 µl of which were loaded into the nanospray gold coated glass capillary for sample delivery.

### Isolation of mutants impaired in PCN biosynthesis

A mutant library of PCL1391 consisting of 18,000 transposants was established using pRL1063a (Wolk et al. 1991), harbouring a Tn5-transposon carrying promoterless *luxAB* reporter genes. Mutants were selected for absence of, or change in, pigment production either on LB agar plates or in 200 µl liquid KB cultures grown in 96-well microtiter plates for three days. Phenotypic characterisation of the mutants for production of PCN, hydrogen cyanide, chitinase or protease; for motility (Chin-A-Woeng et al. 1998), and for tomato root colonising ability (Simons et al. 1996) was performed as previously described.

Since the Tn5 transposon in the transconjugants contains an origin of replication that functions in *E. coli* (Wolk et al. 1991), chromosomal DNA regions flanking the transposon were recovered from the genome by excision with *Eco*RI, followed by circularisation, transfer to *E. coli,* and analysis by nucleotide sequencing. Nucleotide sequencing of the flanking regions was performed using unique primers oMP458 (5'TACTAGATTCAATGCTATCAATGAG 3') and oMP459 (5'AGGAGGTCACATGGAATATCAGAT 3') directed to.the left and right ends of the Tn5 transposon, respectively.

### Isolation and identification of luxl and luxR homologues

A plasmid library of chromosomal fragments of strain PCL1391 was constructed by cloning chromosomal DNA digested with *Eco*RI into the multicloning site of pBluescript (Stratagene, La Jolla, CA, USA). After electroporation of this fragment library to an *E. coli lux* reporter strain containing pSB401 and overnight growth on LB agar plates, clones that induced the luciferase reporter were identified using a photographic film. To cure the *E. coli* strain from the pSB401 reporter construct, chloramphenicol selection was omitted white carbenicillin selection was maintained. The nucleotide sequence of the chromosomal insert in the remaining plasmid was determined using standard primers, e.g. the universal and -40 reverse primer, flanking the multiple cloning site of pBluescript.

### Expression of bioluminescent Tn5luxAB reporter strains

Expression of Tn*5luxAB*-tagged genes was determined by quantification of bioluminescence during culturing. Cells from overnight cultures were washed with fresh medium and diluted to an optical density (OD₆₂₀) of 0.1. Cultures were grown in LB medium in a volume of 10 ml under vigorous shaking, Growth was followed by measurement of optical density (OD₆₂₀) at regular intervals and 100 µl samples were taken in triplicate to quantify luminescence. A volume of 100 µl of an n-decyl-aldehyde substrate solution [0.2% *n*-decyl-aldehyde (Sigma, St. Louis, MO, USA) in a 2.0% bovine serum albumin (BSA) solution] was added. After thorough mixing, bioluminescence was determined using a luminescence counter (MicroBeta 1450 TriLux, Wallac, Turku, Finland).

The synthetic *N*-AHL molecules *N*-butanoyl-L-homoserine lactone (BHL), *N*-hexanoyl-L-homoserine lactone (HHL), *N*-octanoyl-L-homoserine lactone (OHL), N-decanoyl-L-homoserine lactone (DHL), *N*-dodecanoyl-L-homoserine lactone (dDHL), *N*-oxo-hexanoyl-L-homoserine lactone (OHHL), *N*-oxo-octanoyl-L-homoserine lactone (OOHL), and *N*-oxo-decanoyl-L-homoserine lactone (ODHL) (kindly provided by P. Williams, University of Nottingham) were tested for the ability to induce *Tn5luxAB* reporter strains. Cells were grown overnight in LB medium, washed, and resuspended to a cell density of 0.1 at OD₆₂₀ in fresh medium supplemented with either synthetic *N*-AHL(s) (5 µM) or spent growth supernatant (10% vol/vol) and grown to stationary phase. Luminescence was determined after every 0.1 unit increase of OD₆₂₀ and compared to that of the control without added *N*-AHL.

### Construction of gacS mutants

Site-directed mutagenesis in the *gacS* homologous gene was performed using pMP6014, a pIC20R suicide construct containing a 0.3 kb internal PCR-fragment of the gacS-homologous gene of strain PCL1391 and a tetracycline resistance cassette. The PCR primers contained *KpnI* and EcoRI (underlined) restriction sites and annealed to nucleotide positions 1084 to 1103 (5'CCGGAATTCGAGCCACGAAATCCGTACCC 3') and 1294 to 1313 (5' CGGGGTACCTCAGGGTGTCCTGCAACAGG 3') of the *gacS* homologous gene of strain PCL1391. The construct was transformed to strain PCL1391 and its derivatives by electroporation and resistant colonies resulting from chromosomal integration were selected on LB agar medium supplemented with' tetracycline (160 µg/ml) for PCL1391 or kanamycin (50 µg/ml) and tetracycline for derivatives. Transformants were analysed for correct recombination using Southern hybridisation. The effect of a mutation in the *gacS* gene on the expression of genes was determined by quantifying bioluminescence of the *luxAB*-reporter during culture in KB-medium supplemented with 100 µM FeCl₃.

### Construction of lexA mutants

A similar mutagenesis strategy as described above was used for the introduction of a mutation in the *lexA* homologous gene. The *lexA* fragment for constructing the suicide plasmid pMP6015 was obtained by PCR using primers oMP506 (5'CCCAAGCTTCCGCCTGACAAACACTTG3') and oMP507 (5'CCCAAGCTTATTTCGATCGCGCCCTTG3') of the *lexA* homologous gene of strain PCL1391.

### Micro-organisms and media

King's medium B (KB) (King et al. 1954) was used routinely for culturing *Pseudomonas* strains. Media were solidified with 1.8% agar (Difco Laboratories, Detroit, MI) when necessary. Kanamycin (50 µg/ml) was added for antibiotic selection where applicable. The expression of the PCN biosynthetic genes was determined in Vogel-Bonner defined medium (Smit et al. 1987) and KB medium.

### In vitro expression of Tn5luxAB reporter strains

Expression of the Tn5*luxAB*-tagged gene was determined by quantification of bioluminescence during growth in liquid cultures. Cells from overnight cultures pre-grown in the tested medium were washed with fresh medium and diluted to an optical density (OD₆₂₀) of 0.1. Cultures were grown in a volume of 10 ml under vigorous aeration. Growth was followed by measurement of optical density (OD₆₂₀) at regular time intervals and 100 µl samples were taken in triplicate to quantify luminescence. A volume of 100 µl of a 0.2% *n*-decyl-aldehyde (Sigma, St. Louis, MO) in 2.0% bovine serum albumin (BSA) solution was added as the substrate to the sample. After thorough mixing bioluminescence was determined using a luminescence counter (MicroBeta 1450 TriLux, Wallac, Turku, Finland).

To test the influence of root exudate components, malic acid, L-pyroglutamic acid, fumaric acid, citric acid, propionic acid, oxalic acid, succinic acid, glucose, ribose, xylose, sucrose, fructose, or maltose were individudually used in a final concentration of 2 µM as a carbon source in Vogel-Bonner medium. The medium was supplemented with 1.0% proteose peptone since otherwise neither the PCL1119 *phzB::Tn5luxAB* reporter strain nor the parental wild-type strain PCL1391 could reach an OD₆₂₀ of 1.0 in minimal medium. Growth in 1.0% proteose peptone was used as a control.

The expression of the PCN biosynthetic genes.under the influence of metal ions was quantified in Vogel-Bonner medium with glucose as a sole carbon source containing 100 µM FeCl₃, thiamine (2 mg/L), and biotin (2 mg/L). Standard Vogel-Bonner medium contains ZnSO₄ (5 µM), CuSO₄ (2 µM), MnSO₄ (30 µM), and NaMoO₄·H₂O (20 µM). To determine the influence of the presence of single metal ions on *phzB* expression, individual ions were either omitted or added in a tenfold (Cu²⁺, Mn²⁺, Zn²⁺, MoO₄⁻) or hundredfold (Fe³⁺) . higher concentration.

To test the influence of a low oxygen tension, strains were grown in 40 ml KB medium in closed glass tubes under a continuous flow-through of 1.0% oxygen and 99% nitrogen, as described by Camacho *et al.* (submitted,) or in normal air as a control. Bioluminescence was measured as described above.

### Results

### Purification and identification of autoinducers produced by P. chororaphis

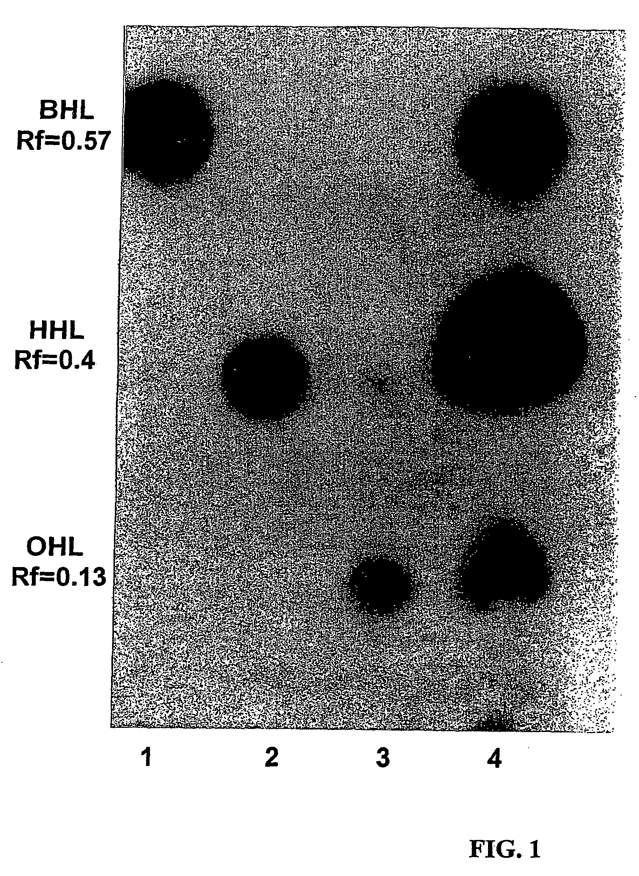

Production of PCN in *P. chlororaphis* strain PCL1391 (Table 1) appeared to be cell density dependent and therefore likely to be subject to quorum sensing (Chin-A-Woeng *et al.,* submitted). To analyse the production of autoinducer(s) by strain PCL1391, a crude dichloromethane extract of spent culture medium of a 72-hour culture of strain PCL1119 *(phzB::*Tn*5luxAB)* (Chin-A-Woeng et al. 1998) was used. Strain PCL1119, a PCL1391 derivative unable to produce PCN due to a mutation in the biosynthetic *phzB* gene (Chin-A-Woeng et al. 1998), was used for autoinducer purification to overcome the problem of copurification of PCN and autoinducer(s) in the wild-type strain. PCL1119 was not changed in its autoinducer production in comparison with the wild-type strain. Extracts of the culture. supernatatns of strain PCL1119 were tested for induction of a number of quorum sensing reporter systems including those for *Chromobacterium violaceum* pigmentation (McClean et al. 1997), *Photobacterium fisheri* luminescence *(lux)* (Stevens and Greenberg 1997), *Pseudomonas aeruginosa* elastase (las) (Pearson et al. 1997) and *Agrobacterium tumefaciens* conjugation *(tra)* (Hwang et al. 1995). After separation using C18 thin layer chromatography (TLC), three spots were detected in the *Chromobacterium* overlay system, (Fig. 1, lane 4). One major spot with R_{f} value 0.4 migrated to the same position as synthetic HHL (Fig. 1, lane 2). When a large quantity of sample was applied to the TLC-plate, a second spot with an R_{f} value of 0.57 was detected which migrated to the same position as synthetic BHL (Fig. 1, lane 1). A third spot with R_{f} value 0.13 was found to comigrate with synthetic OHL (Fig. 1, lane 3). Extracts of spent culture supernatant were also able to induce the *lux*-system, whereas they induced only weak signals in the *las*-and *tra-*systems (data not shown). None of the reporter systems was induced by dichloromethane extracts of uninoculated KB or LB growth medium.

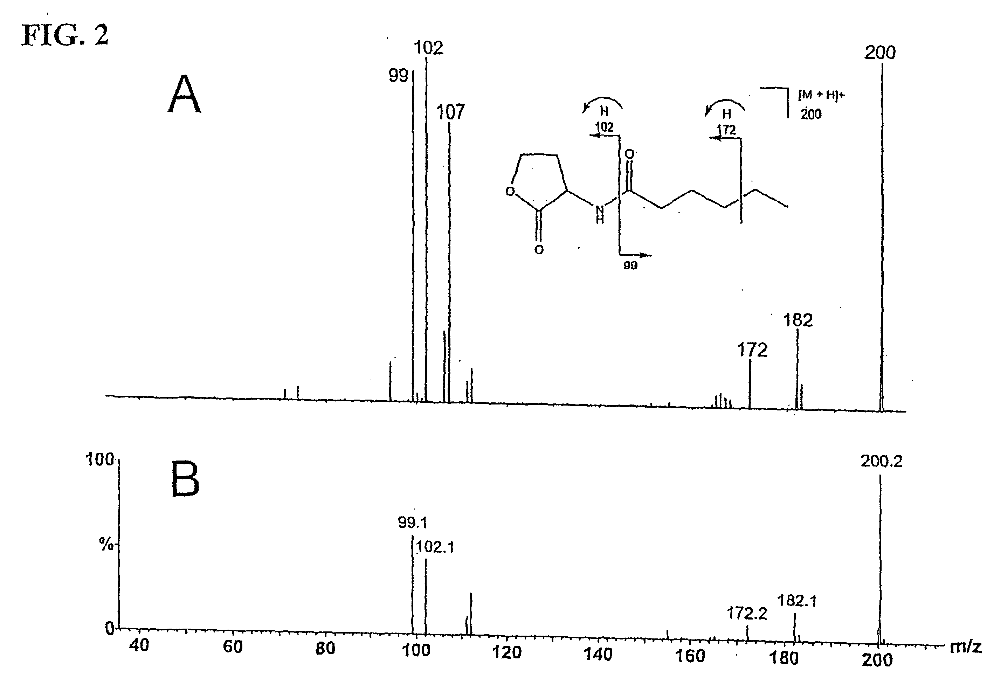

The compound migrating with R_{f} value 0.4 was purified using HPLC and analysed using positive ion mode nanoelectrospray collision induced dissociation (CID) tandem mass spectrometry on a hybrid quadrupole time-of-flight mass spectrometer, which allows exceptional sensitivity in the tandem mode. Instrument conditions were optimised using a solution of standard HHL (1.3 ng/µl), having a concentration approximately one tenth of that necessary to give a response in the bioassay' similar to that of the fraction isolated from strain PCL1391. Following optimisation, a CID spectrum, in which fragmentation is induced on collision with a positive pressure of argon, of the standard was recorded (Fig. 2A). The needle containing the standard was then discarded. A CID spectrum was then recorded of the same precursor ion mass but introducing solvent only, in order to be certain that no contamination of the instrument had occurred with the standard and to identify any background signals arising from the solvent. No ions corresponding to HHL were observed in this blank spectrum, although an ion at *m*/*z* 107, also observed in the HHL spectrum, was present. The bioactive fraction was then introduced into the mass spectrometer in a fresh needle, and a mass spectrum was recorded. Very weak pseudomolecular ions were observed at *m*/*z* 200 (M+H⁺) and 222 (M+Na⁺) for a species with a molecular mass corresponding to HHL. These ions were barely discernible above the background. However, a CID spectrum of the M+H⁺ ion at *m*/*z* 200 was recorded, and generated a spectrum of good quality (Fig. 2B) which is very similar to that obtained from the standard HHL (Fig. 2A). Fragment ions characteristic of HHL were observed at *m*/*z* 99, 102, 172, and 182 (Fig. 2A inset). The ions at *m*/*z* 99 and 102 are generated on fragmentation of the amide bond between the hexanoyl moiety and the homoserine lactone, with the ion at *m*/*z* 99 corresponding to the hexanoyl substituent and that at *m*/*z* 102 being characteristic of the homoserine lactone. The ions at *m*/*z* 172 and 182 arise by the loss of small neutrals (*m*/*z* 172 = M+H⁺-C₂H₄; *m*/*z* 182 = M+H⁺-H₂O). These results demonstrate clearly that the component in the major bioactive fraction is *N*-hexanoyl-L-homoserine lactone (HHL).

In dichloromethane extracts of spent culture supernatant the other two activities were present in small amounts and were not sufficient for mass spectrometric analyses and are thus tentatively assigned as *N*-butanoyl-L-homoserine lactone (BHL) and *N*-octanoyl-L-homoserine lactone (OHL) based upon their TLC migration behavior and their biological activities in the *lux-, las-,* and *tra*-reporter systems.

### Isolation and characterisation of mutants affected in PCN biosynthesis

Screening of 18,000 *Tn5luxAB* PCL1391 transconjugants on agar plates and in liquid cultures resulted in the isolation of eight mutants altered in PCN production as judged by their 'altered pigmentation. Four mutants were .identified of which the transposon was not inserted in a PCN biosynthetic gene. The regions flanking the Tn5 insertion in the four mutants, PCL1103. *(phzI::Tn5luxAB),* PCL1104 *(phzR::Tn5luxAB),* PCL1123 *(gacS::Tn5luxAB),* and PCL1111 *(lexA::Tn5luxAB)* were recovered in the plasmids pMP6003, pMP6004, pMP6006, and pMP6005, respectively. Nucleotide sequence analyses of the flanking regions showed that the transposons in these mutants were inserted in homologues of *luxI, luxR, gacS,* and *lexA* genes, respectively.

### Characterisation of phzl and phzR mutants

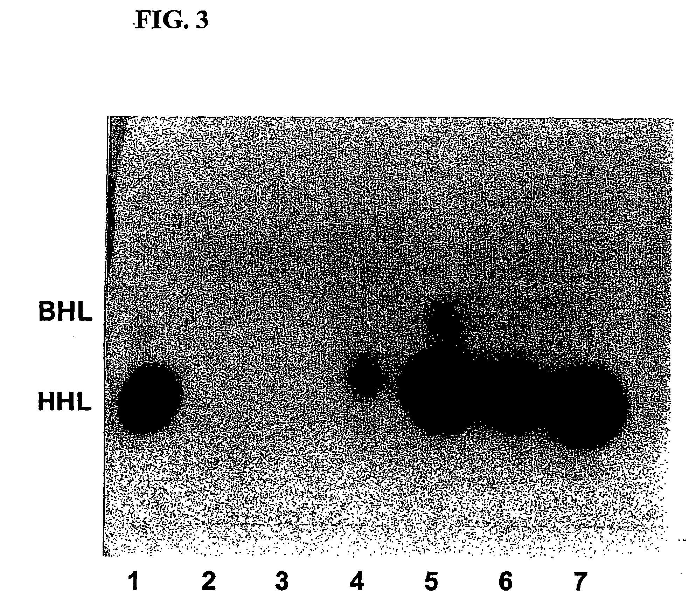

The production of PCN by these strains was determined using TLC and HPLC after extraction of culture supernatants with toluene. PCN was not detected in the toluene extracts of PCL1103 *(phzI::*Tn*5luxAB)* and PCL1104 *(phzR::*Tn*5luxAB)* (data not shown), nor were any autoinducers detected in dichloromethane extracts of these strains (Fig. 3). PCN production in the *phzI* mutant, but not in the *phzR* mutant, was restored by addition of either spent growth medium from PCL1119 *(phzB::*Tn*5luxAB)* or synthetic HHL (data not shown). The *phzI* and *phzR* mutants were not altered in the production of HCN, protease, or chitinase (Table 2). Neither mutant was impaired in motility or their ability to colonise in competition with the parental strain the tomato rhizosphere as assayed in competition with a *lacZ*-tagged derivative of the wild type strain PCL1391 (data not shown). Strains PCL1103 *(phzI::*Tn*5luxAB)* and PCL1104 *(phzR::*Tn*5luxAB)* were not able to inhibit growth of *F. oxysporum* f.sp. *radicis-lycopersici* as was shown with an in vitro antifungal assay (data not shown), which is consistent with the observed lack of PCN production.

### Isolation and characterisation of luxI and luxR homologues of strain PCL1391

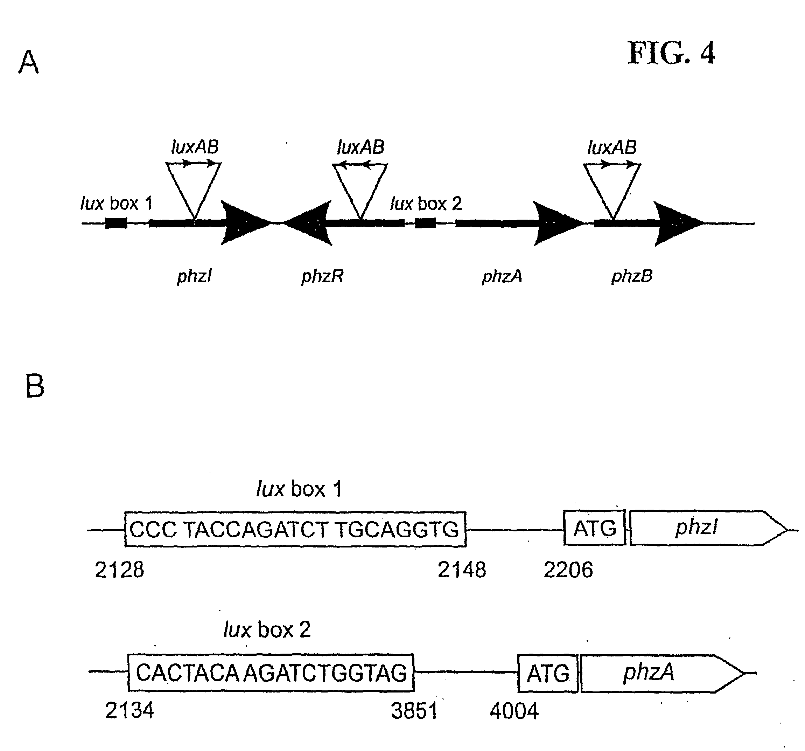

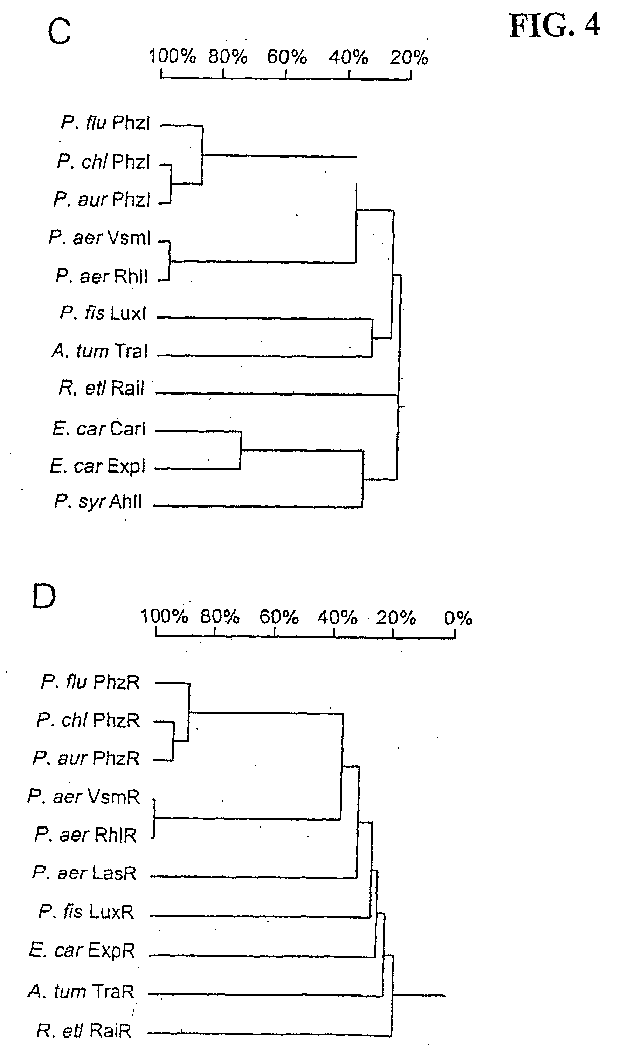

To isolate a PCL1391 chromosomal fragment containing *luxI* and *luxR* homologues, an *Eco*RI chromosomal library was transformed to DH5α harbouring pSB401; an N-AHL dependent reporter construct based upon the *Photobacterium lux*-system (McClean et al. 1997). Plasmid pMP6007 appeared to induce the reporter and contained a 4.5 kb chromosomal fragment of PCL1391. Partial sequencing of this clone revealed the complete *phzI* and *phzR* genes and the start of *phzA* (Fig. 4), the first gene of the PCN biosynthetic cluster (Chapter 4).

*E. coli.* strains harbouring pMP6007 induced the DH5α[pSB401] and *Chromobacterium* CV026 reporter strain when streaked in the vicinity of the reporter, indicating the production of a diffusible *N*-AHL. To test whether *phzI* and *phzR* are responsible for synthesis of HHL, culture supernatants of *E. coli* DH5α with and without pMP6007 were extracted with dichloromethane and subjected to TLC analysis. Autoinducer activities with R_{f} values identical to those from the wild type PCL1391 culture supernatants were only detected in strains harboring pMP6007, whereas no activity was detected in the DH5α control (data not shown).

To transfer the *phzI* and *phzR* genes to PCL1391 mutant derivatives, plasmid pMP6008 was constructed by transfer of the 4.5 kb *Eco*RI chromosomal fragment containing the *phzI* and *phzR* genes of strain PCL1391 from pMP6007 to pME6010, a shuttle vector stably maintained in *Pseudomonas* species (Heeb et al. 2000). After introduction of pMP6008 into strains PCL1103 *(phzI::*Tn*5luxAB)* and PCL1104 *(phzR::*Tn*5luxAB)*, PCN production was restored in both mutants as demonstrated on TLC analysis of culture supernatants (data not shown). This and the mutant studies described previously show that PhzI and PhzR are involved in the synthesis of the autoinducers BHL, HHL, and OHL.

Sequence analysis of the ORFs shows that the *phzI* and *phzR* genes are oppositely transcribed, with *phzI* being transcribed in the same direction as the *phz* biosynthetic operon (Fig. 4A). In the promoter regions of the *phzI* and *phzA* genes, sequences were identified that are homologous to the *lux*-box in *Photobacterium fisheri,* constituting a putative binding region for the transcriptional activator *luxR* (Fig. 4B).

The *phzI-* and *phzR*-homologous genes of PCL1391 were most homologous (85 to 95%) with other *phzI* (Fig. 4C) and *phzR* (Fig: 4D) genes in the PCA-producing *Pseudomonas* strains *P. fluorescens* 2-7.9 and *P. aureofaciens* 30-84. Homology. with other LuxI and LuxR homologues in other *Pseudomonas* species and other bacterial species was much lower (20 to 40%).

### lnfluence of exogenous, autoinducers on the expression of the phzI, phzR genes, and the biosynthetic operon

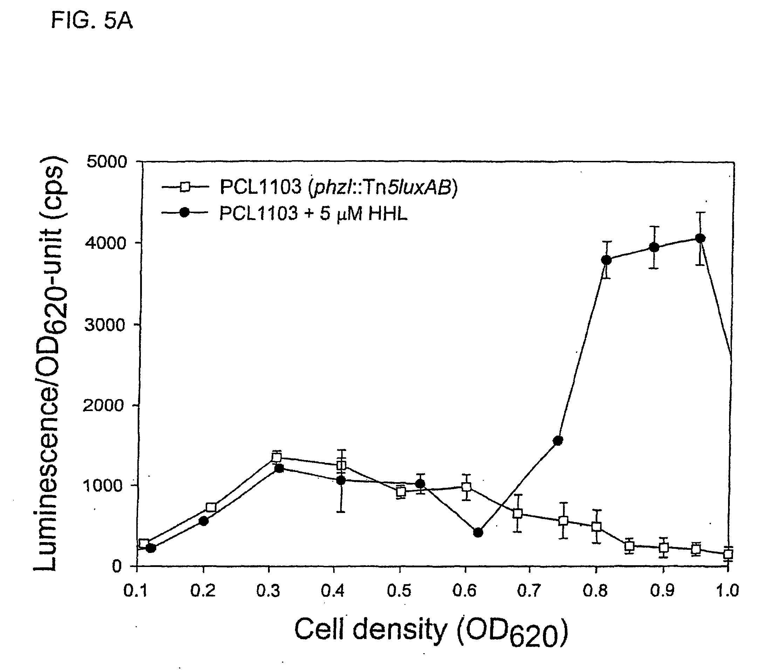

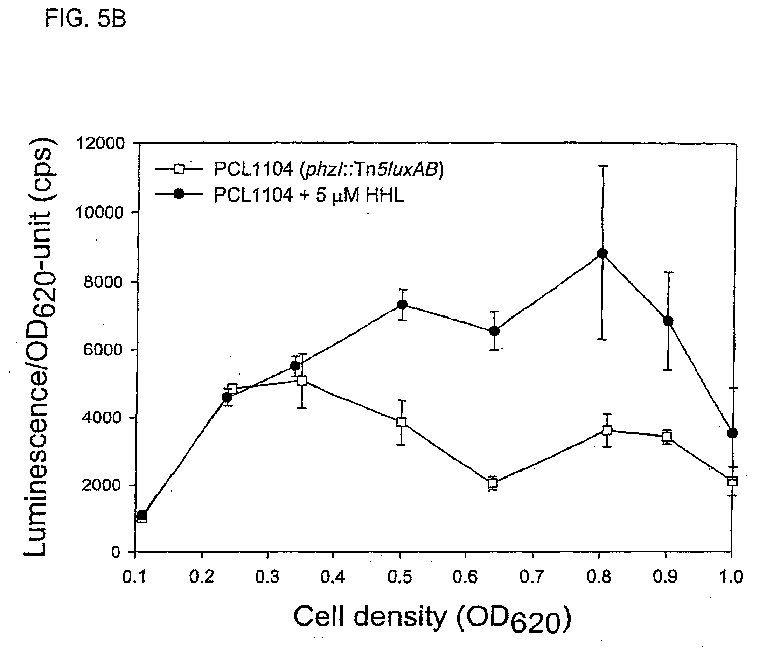

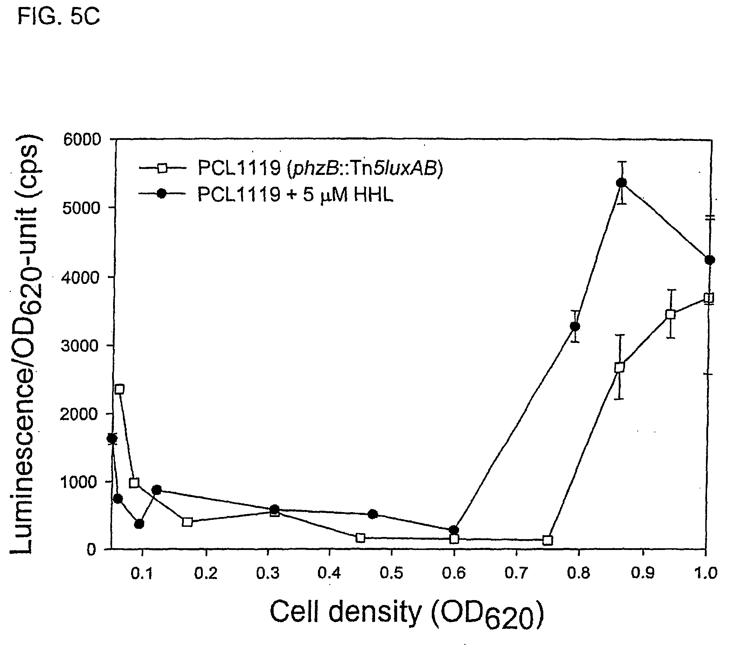

Previously, a number of biosynthetic mutants had been identified, of which mutant PCL1119 contains a promotorless *luxAB* reporter in the *phzB* gene and was used for expression studies in the tomato rhizosphere (Chin-A-Woeng et al. 1998). This strain was used to quantify the expression of the PCN biosynthetic operon during growth in liquid cultures. Since the promoterless *luxAB* genes inserted in the same orientation as the direction of transcription of the *phzI* and *phzR* genes mutated in PCL1103 *(phzI::*Tn*5luxAB)* and PCL1104 *(phzR::*Tn*5luxAB)*, these strains were also used' to quantify the expression of these genes. Expression of the *phzl* gene in mutant PCL1103 remained at a basal level during growth, indicating that inducing activity is absent without a functional *phzI.* Addition of synthetic HHL or spent growth medium of an overnight culture of PCL1391 to a *low* density (OD₆₂₀ 0.1) cell culture of PCL1103 resulted in an induction of *phzI* expression once the cell culture has grown to an OD₆₂₀ of 0.6 or more (Fig. 5A). Expression of *phzR* in mutant PCL1104 was constitutive both in the presence of exogenous HHL and in the absence of endogenous autoinducers (Fig. 5B). Expression of the PCN biosynthesis gene cluster *(phzB::*Tn*5luxAB)* in PCL1119 was greatly increased in the late exponential/early stationary phase and the moment of induction could be advanced by addition of synthetic HHL (Fig. 5C) but not by other synthetic *N*-AHLs.

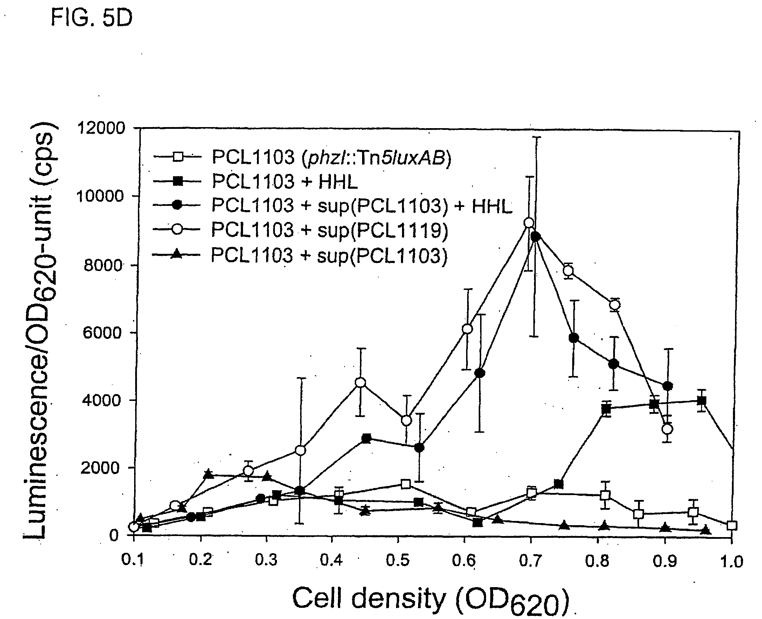

Addition of cell-free spent culture medium of the N-AHL-producing strain PCL1119 *(phzB::*Tn*5luxAB)* to a fresh culture of strain PCL1103 *(phzI::*Tn*5luxAB)* led to a much earlier and larger induction of the *phzI* gene than addition of synthetic HHL. Although addition of spent culture medium of an overnight culture of strain PCL1103 as such did not induce the *phzI* gene, a synergistic effect was observed when it was added together with HHL. Induction of expression in the presence of culture supernatant of strain PCL1103 was already in mid-exponential phase growth (OD₆₂₀ 0.35), much earlier than in the presence of HHL only (Fig. 5D). Combinations of autoinducers produced by strain PCL1391 were tested 'for their possible synergistic effect on expression. None of the combinations BHL/HHL, HHL/OHL, or BHL/HHL/OHL resulted in a different level or point of onset of induction than that observed after addition of HHL only (data not shown).

### Analysis of mutants in a gacS homologue

Toluene extracts of culture supernatants of strain PCL1123 *(gacS::*Tn*5luxAB)* did not contain PCN as judged after TLC and HPLC separations. The production of autoinducer in this strain was greatly reduced compared with that in the wild-type as judged from TLC analysis of extracts of cell-free growth supernatant of three-day old cultures (Fig. 3, lane 4). PCN production could not be restored by the addition of spent growth medium of PCL1119 *(phzB::*Tn*5luxAB)* or of synthetic HHL (data not shown). Strain PCL1123 *(gacS::*Tn*5luxAB)* was not altered in the production of HCN but lacked protease and chitinase production (Table 2). The mutant was not impaired in motility or ability to colonise the tomato rhizosphere in competition with a *lacZ*-tagged derivative of the wild type strain (data not shown). Like strains PCL1103 *(phzI::*Tn*5luxAB)* and PCL1104 *(phzR::*Tn*5luxAB)*, PCL1123 was not able to inhibit growth of *F. oxysporum* f.sp. *radicis-lycopersici* in an vitro antifungal assay (data not shown).

The part of the nucleotide sequence flanking the' transposon in strain PCL1123 that was analysed has a total length of 999 bp and is 90% identical to the sequence of the *gacS* (formerly known as *lemA)* gene of *P. fluorescens* (Whistler et al. 1998) and has 84% identity with the *gacS* gene of *P. syringae* (Rich et al. 1994).

A *gacS* mutant independently constructed by homologous recombination using a pIC20R suicide construct containing a tetracycline resistance cassette and a PCR fragment of an internal fragment of the *gacS* homologous gene (pMP6014) yielded mutants with the same phenotype as PCL1123, confirming that the phenotype observed in strain PCL1123 was due to the transposon insertion in *gacS.*

The *gacS* mutant was complemented for production of PCN, protease, and chitinase after introduction of pEMH97, a pLAFR3 derivative containing the *lemA* gene of *P. syringae* (Hrabak and Willis 1992). Introduction of the pEMH97 construct into the *phzI* mutant PCL1104 and the *phzR* mutant PCL1104 did not restore PCN production and neither did introduction of pMP6008, containing the *phzI* and the *phzR* genes, restore PCN production in the *gacS* mutant.

### Influence of a gacS mutation on phzI, phzR, and phzB mutants

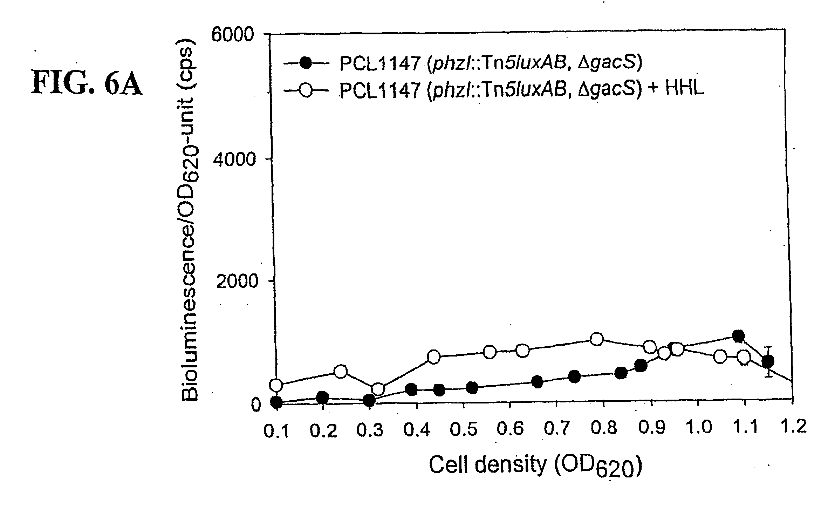

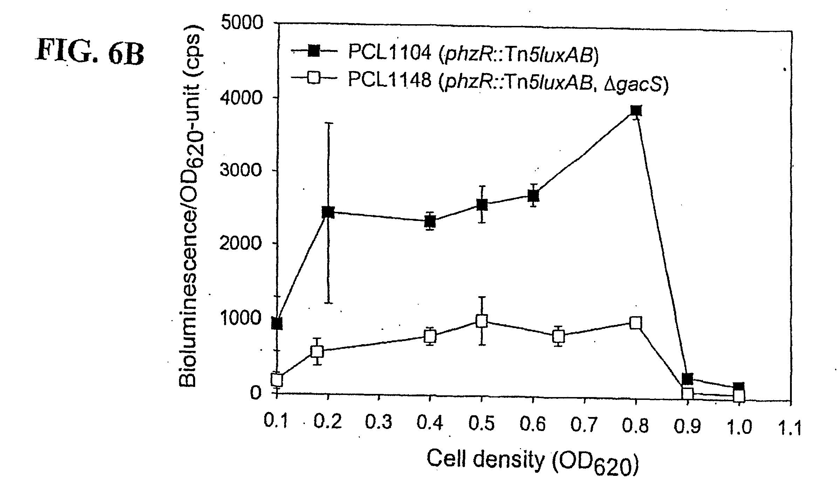

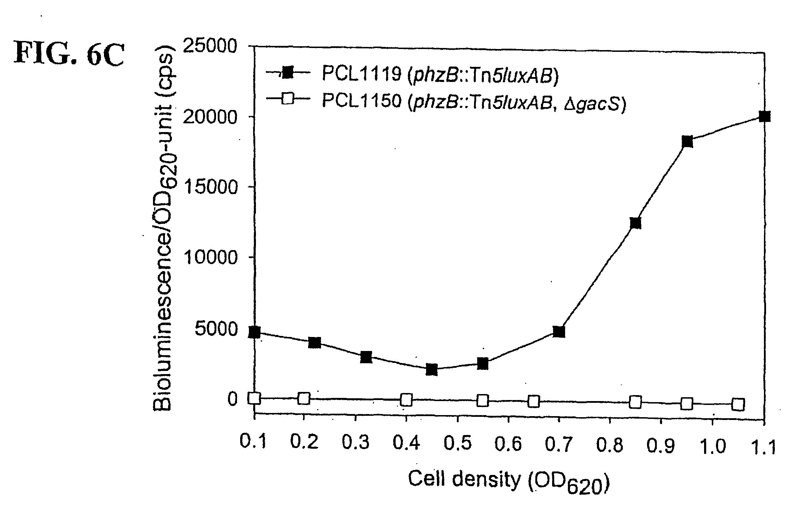

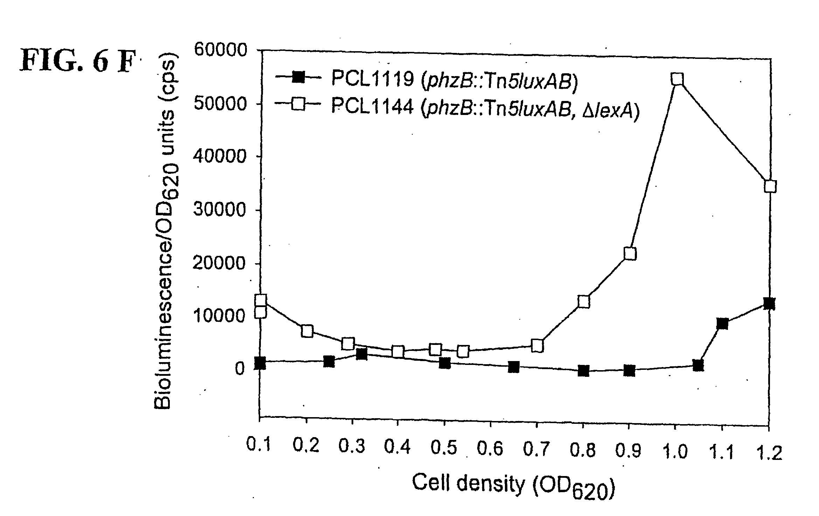

To analyse the effect of a *gacS* mutation on the expression of *phzI, phzR,* and *phzB,* a mutation in the *gacS* homologous gene was introduced in the reporter strains PCL1103 *(phzI::*Tn*5luxAB)*, PCL1104 *(phzR::*Tn*5luxAB)*, and PCL1119 *(phzB::*Tn*5luxAB)* using homologous recombination. Analyses of the *luxAB* expression in these strains showed that the response characteristic for a quorum sensing regulation mechanism is abolished by an additional *gacS* mutation (Fig. 6A, B, and C). Whereas *phzI* in PCL1103 *(phzI::*Tn*5luxAB)* is responsive to added synthetic HHL, *phzI* in the double mutant PCL1147 *(phzI::*Tn*5luxAB, ΔgacS)* is not induced by the addition of autoinducer (Fig. 6A). The basal level of expression of the *phzR* gene is reduced with an additional defective *gacS* gene (Fig. 6B). The expression of the biosynthetic *phzB* gene is completely abolished in a *gacS* background (Fig. 6C) as was the PCN production of the *gacS* mutant PCL1123 (data not shown).

### Characterisation of the PCN-overproducing lexA mutant

The mutation of *lexA* in PCL1111 resulted in a more than tenfold overproduction of PCN (Table 2 and unpublished results). An increased production of autoinducer was observed as judged from the increased intensity of the spot for HHL and the clear presence of BHL, which is normally only detected when larger amounts of sample are analysed on TLC. This apparent overproduction of autoinducer is consistent with higher PCN expression levels in the *lexA* mutant. No alterations in production of HCN, protease, and chitinase were detected in the *lexA* mutant strain. The mutant was not impaired in motility or ability to colonise the tomato root system as assayed in competition with a *lacZ*-tagged derivative of the wild type strain PCL1391 (data not shown).

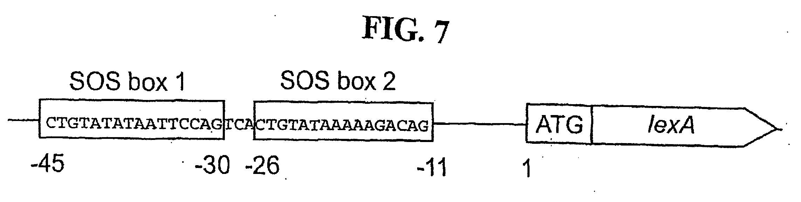

Analysis of 1.5 kb of the nucleotide sequence flanking the transposon in mutant PCL1111 revealed a transposon insertion in a gene homologous with the *lexA* genes of *P. aeruginosa* (90%), *P. putida* (87%) (Garriga et al. 1992), and *E*. *coli* (41%) (Brent and Ptashne 1981; Little et al. 1981; Calero et al. 1993). In the promoter region of the *lexA* homologue two putative LexA repressor binding sites starting at relative nucleotide positions -26 (5'-CTGTATAAAAAGACAG-3') and -45 (5'-CTGTATATAATTCCAG-3') were identified, the distance between them being 3 bp (Fig. 7).

An independently constructed *lexA* mutant made by homologous, recombination using a pIC20R suicide construct containing a tetracycline resistance cassette and a PCR fragment of a part of the *lexA* gene (pMP6015) yielded a mutant with the same phenotype as PCL1111 *(lexA::Tn5luxAB)*. The overproduction of PCN was also observed in this independent mutant confirming that the phenotype observed in PCL1111 is due to the transposon insertion in *lexA*.

### Influence of a lexA mutation on phzI, phzR, phzB, and gacS genes

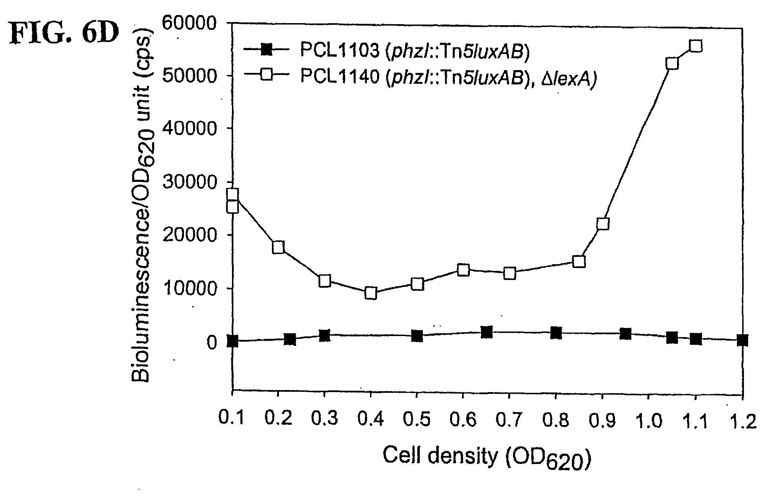

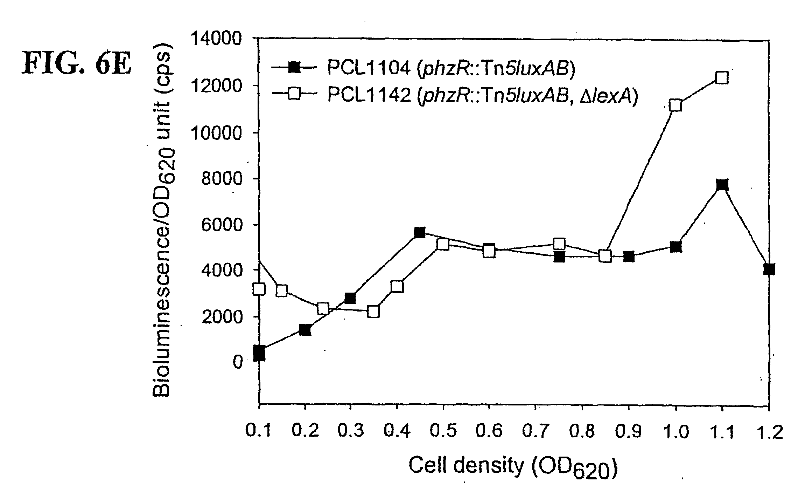

*A lexA* mutation was made in PCL1103, PCL1104, PCL1119, and PCL1123 by homologous recombination using pMP6015. Surprisingly, introduction of a lexa mutation in the *phzI* or *phzR* mutant strains PCL1103 and PCL1104 restores PCN pigment production in these strains to almost wild-type levels. This was demonstrated on HPLC fractionation of culture supernatant extracts (data not shown) and observations of colonies on agar plates (data not shown). Expression of *phzI* and *phzB* in a *lexA* mutant was determined using the Tn*5luxAB* reporters (Fig. 6D, F). Surprisingly, *phzI*::Tn*5luxAB* in PCL1140 *(ΔlexA, phzI::*Tn*5luxAB)* was induced at the start of the stationary phase, even in the absence of autoinducers (Fig. 6D). The basic level of expression of *phzI,* and consequently of *phzB* (Fig. 6F), was higher than that of the parental strain PCL1103. A small positive' effect was observed on the expression of *phzR::*Tn*5luxAB* of the lexA mutation (Fig. 6E). An additional *lexa* mutation in the *gacS* mutant PCL1123 (PCL1162) did not restore PCN production as observed for *phzI* and *phzR* mutants and resulted in the same phenotype as PCL1160 *(lexA*::Tn*5luxAB; ΔgacS).*

Although the effect of a gacS. mutation on the expression of *lexA* strain PCL1160 could not be determined by measuring luminescence due to the incorrect insertion of the reporter genes, the *lexA*/*gacA* double mutant did not produce PCN as demonstrated on TLC analysis of extracts of spent culture medium.

### Influence of root exudate components on expression of the PCN biosynthetic operon

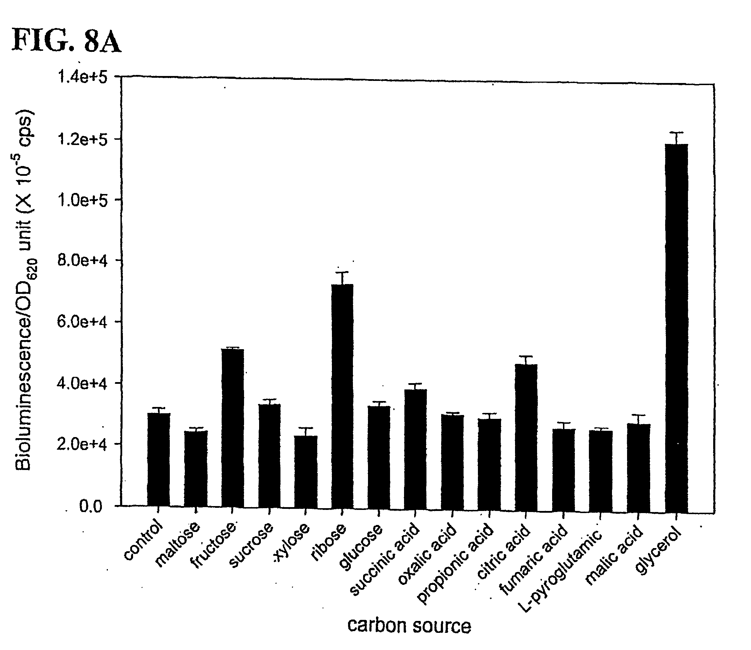

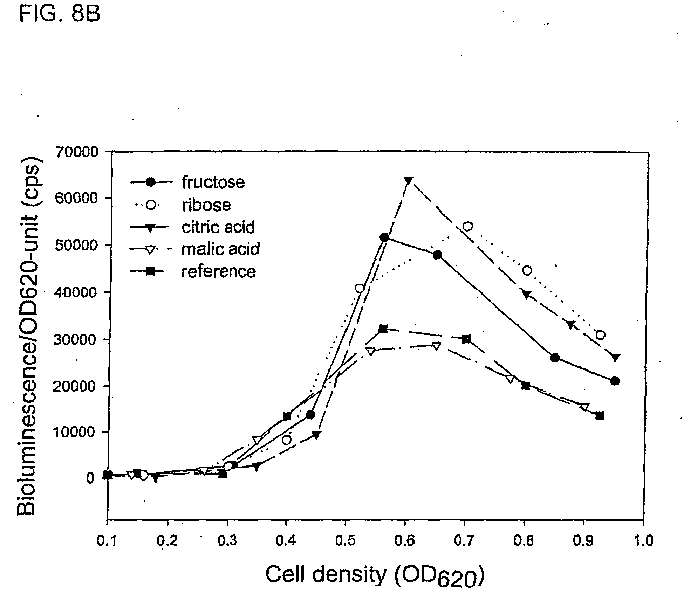

Strain PCL1119 *(phzB::*Tn*5luxAB)* is a derivative of strain PCL1391 in which a promoterless *Tn5luxAB* transposon is inserted into the *phzB* gene. This bioluminescent reporter strain can be used to analyze the expression of the PCN biosynthetic operon (Chin-A-Woeng et al. 1998). The influence of the tomato *(Lycopersicon esculentum* Mill. cv. Carmello) root exudate components malic acid, L-pyroglutamic acid, fumaric acid, citric acid, propionic acid, oxalic acid, succinic. acid, glucose, ribose, xylose, sucrose, fructose, and maltose on expression of the PCN biosynthetic operon was tested. Most of the tested single root exudate components had no significant effect (FIG. 8A) on the expression of *phzB,* neither on the point of onset of induction (data not shown). However, the presence of fructose, ribose, or citric acid appeared to increase the expression of the PCN biosynthetic operon significantly compared with the control (FIG.8A). Glycerol, the presence of which in root exudate had not been demonstrated, appeared to be the carbon source that caused the largest increase in expression. The effect of these carbon sources was followed further as a function of growth(FIG.8B). The control medium and medium to which malic acid was added were used as controls. The results indicate that expression was highest at the end of the logarithmic growth phase and during stationary phase. A dear increase in expression was observed for fructose, ribose, and citric acid when compared with malic acid or the control medium.

### Influence of metal ions on expression of the PCN biosynthetic operon

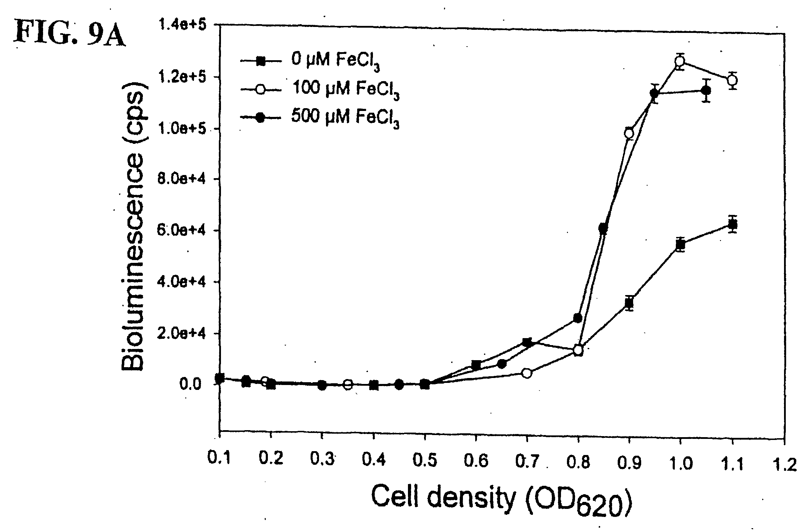

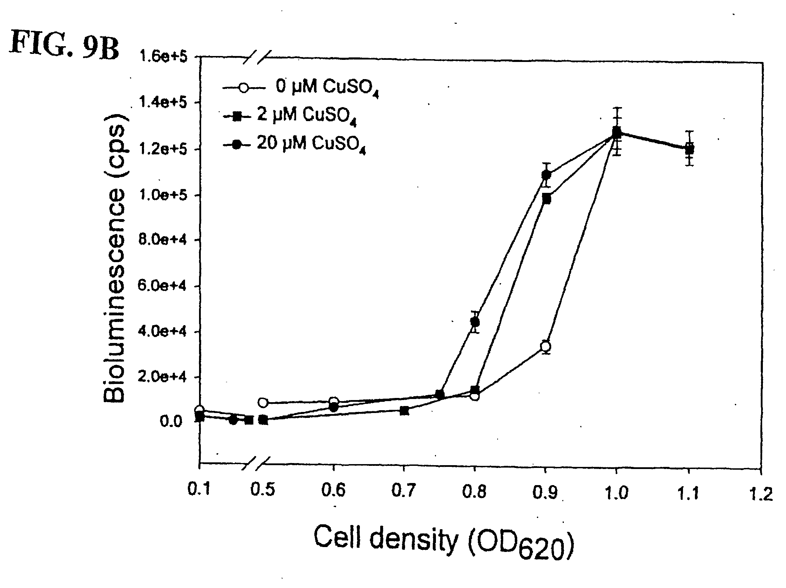

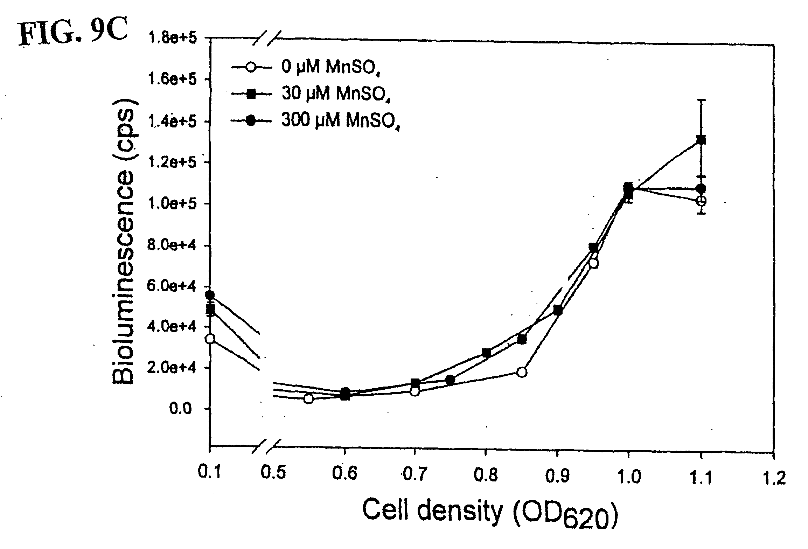

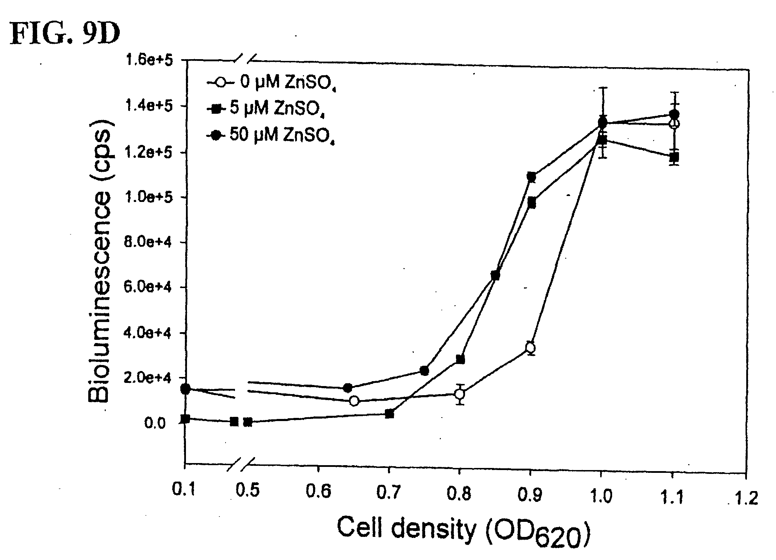

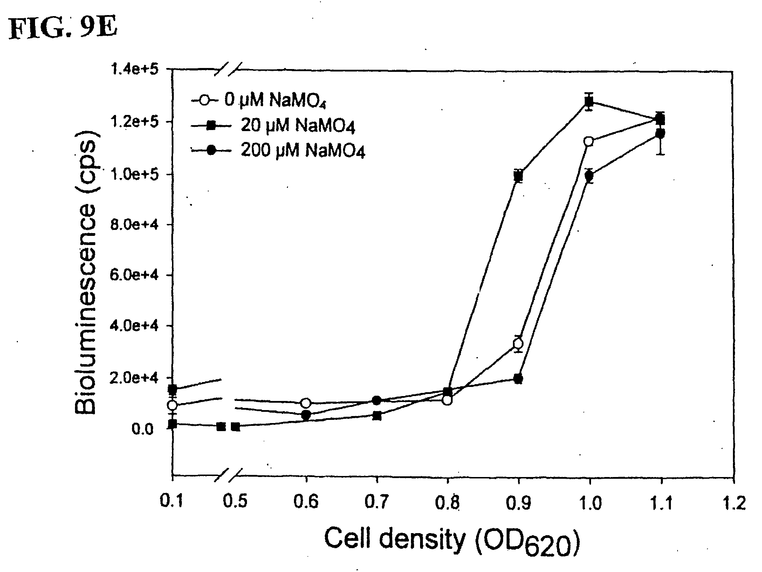

To test the effect of limitation or a tenfold or hundredfold increased concentration of Zn²⁺, Cu²⁺, Mn²⁺, MoO4⁻, and Fe³⁺ on the expression of the PCN biosynthetic operon in Vogel-Bonner medium these ions were omitted or added in a ten- or hundredfold concentration in Vogel-Bonner medium (FIG. 9). The absence of Cu²⁺(FIG.9B), Zn²⁺ (FIG. 9D), or MoO4⁻ (FIG.9E) delayed expression of *phzB* whereas Fe³⁺ limitation resulted in an apparent delay and lower expression(FIG.9A) No influence of omission of Mn²⁺ was detected (FIG. 9C). Excess of Fe³⁺ (FIG.9A) , Cu²⁺ (FIG.9B) , Zn²⁺ (FIG. (9D), or MoO4⁻ (FIG.9E) had no significant effect. Surprisingly, excess of molybdate, like limitation for this ion, supressed expression of *phzB.*

### Influence of low oxygen tension on expression of the PCN biosynthetic operon

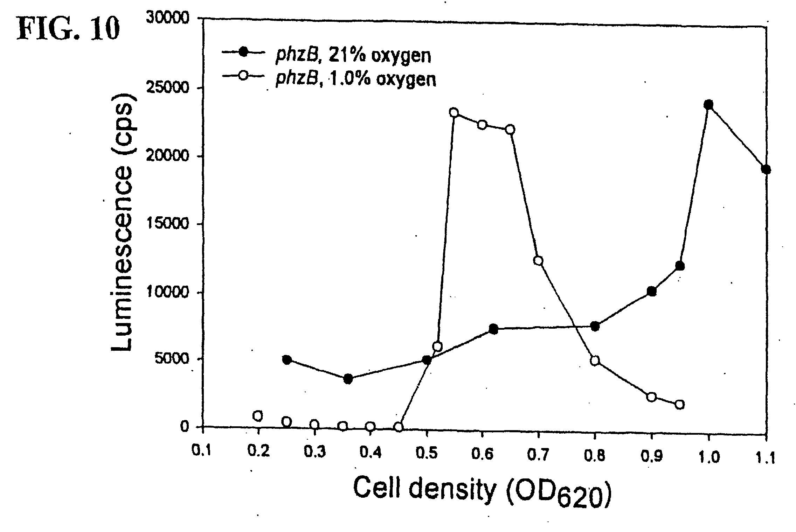

Creating micro-aerobic conditions by growing cultures of the wild-type *P. chlororaphis* strain PCL1391 without shaking resulted in higher production of PCN as was shown on HPLC fractionation of extracts of culture supernatants (data not shown). The expression pattern of the PCN biosynthetic operon under oxygen limiting conditions was determined in a closed system in which cells of strain PCL1119 were grown under aeration with 1.0% oxygen and 99% nitrogen. Indeed, under low oxygen conditions *phzB* expression was induced much earlier in the growth curve than the reference culture grown under aeration of air (FIG. 10)

**Table 1.**

| Microorganisms and plasmids | | |
|---|---|---|
| Strains and plasmids | Relevant characteristics | Reference or source |
| *Bacterial strains* | | |
| PCL1391 | Wild type *Pseudomonas chlororaphis,* producing phenazine-1-carboxamide and biocontrol strain of tomato foot and root rot caused by *F. oxysporum* f*.*sp*. radicis-lycopersici* | Chin-A-Woeng et al., 1998 |
| PCL1119 | PCL1391 derivative in which a promoterless Tn*5luxAB* has been inserted in *phzB* | Chin-A-Woeng et al., 1998 |
| PCL1103 | PCL1391 derivative in which a promoterless Tn*5luxAB* has been inserted in *phzl* | This study |
| PCL1104 | PCL1391 derivative in which a promoterless Tn*5luxAB* has been inserted in *phzR* | This study |
| PCL1111 | PCL1391 derivative in which a promoterless Tn*5luxAB* has been inserted in a *lexA* homologue | This study |
| PCL1123 | PCL1391 derivative in which a promoterless Tn*5luxAB* has been inserted in a *gacS* homologue | This study |
| PCL1140 | PCL1103 derivative, *ΔlexA phzI::*Tn*5luxAB* | This study |
| PCL1142 | PCL1104 derivative, *ΔlexA phzR::*Tn*5luxAB* | This study |
| PCL1144 | PCL1119 derivative, *ΔlexA phzB::*Tn*5luxAB* | This study |
| PCL1146 | PCL1103 derivative, *ΔgacS phzI::*Tn*5luxAB* | This study |
| PCL1148 | PCL1104 derivative, *ΔgacS phzR.:*Tn*5luxAB* | This study |
| PCL1150 | PCL1119 derivative, *ΔgacS phzB::*Tn*5luxAB* | This study |
| PCL1160 | PCL1123 derivative, *ΔlexA gacS:*Tn*5luxAB* | This study |
| PCL1162 | PCL1111 derivative, *ΔgacS lexA::*Tn*5luxAB* | This study |
| DH5α | General purpose *E. coli* host strain | Boyer and Roulland-Dussoix 1969 |
| CV026 | Chromobacterium *violaceum* N-AHL reporter strain | Milton et al., 1997 |
| NT1 | *Agrobacterium tumefaciens* NT1 *N*-AHL reporter strain harbouring pJM749 containing a *lacZ* reporter fused to a *tra* gene of which expression is dependent on TraR. | Piper et al., 1993 |
| *Fungi* | | |
| *Fusarium oxysporum* f. sp. *radicis-lycopersici* strain ZUM2407 *Plasmids* | Cause of crown and root rot of tomato | IPO-DLO, Wageningen, The Netherlands |
| pRL1063a | Plasmid harbouring Tn5 transposon containing promoterless *luxAB* | Wolk et al., 1991 |
| pMP6003 | pRL1063a-based plasmid recovered from chromosomal DNA of PCL1103 after digestion with *Eco*RI | This study |
| pMP6004 | pRL1063a-based plasmid recovered from chromosomal DNA of PCL1104 after digestion with *Eco*RI | This study |
| pMP6005 | pRL1063a-based plasmid recovered from chromosomal DNA of PCL1111 after digestion with *Eco*RI | This study |
| pMP6006 | pRL1063a-based plasmid recovered from chromosomal DNA of PCL1123 after digestion with *Eco*RI | this study |
| pMP6007 | pBluescript containing a 4.5 kb chromosomal fragment of strain PCL1391 with the *phzI, phzR* genes and first part of the *phzA* gene. | This study |
| pMP6008 | pME6010 containing a 4.5 kb chromosomal fragment of strain PCL1391 with the *phzI, phzR* genes and first part of the *phzA* gene. | This study |
| pMP6013 | pIC20R containing a 0.3 kb PCR fragment of the gacS gene and a tetracycline cassette from pMP5000 | This study |
| pSB401 | Autoinducer reporter construct based upon the *Photobacterium* bioluminescence *(lux)* system | Winson et al., 1998 |
| pSB1142 | Autoinducer reporter construct based upon the *P. aeruginosa* elastase *(las)* system | T. Perehinec, Division of Food Sciences. Univ. of Nottingham, pers. comm. |
| pEMH97 | pLAFR3 harbouring the gacS gene of P. *syringae* | Willis et al., 1990(Willis et al. 1990) |
| pME6010 | *E. colil Pseudomonas* shuttle vector, stably maintained in *Pseudomonas* species | Heeb et al., 2000 |
| pMP6014 | pIC20R with a KpnI/EcoRI 0.3 kb internal PCR fragment of *gacS* and a tetracycline marker from pMP5000 inserted in the multicloning site | This study |
| pMP6015 | pIC20R with a *Kpn*I/*Eco*RI 0.3 kb internal PCR fragment of *lexA* and a tetracycline marker from pMP5000 inserted in the multicloning site | This study |

**Table 2.**

| Characteristics of *P, chlororaphis* PCL1391 transposon derivatives | | | | | |
|---|---|---|---|---|---|
| Traits | Bacterial strains | | | | |
| | PCL1391 | PCL1103 | PCL1104 | PCL1123 | PCL1111 |
| Mutated gene | none | *phzI* | *phzR* | *gacS* | *lexA* |
| PCN production | + | - | - | - | ++++ |
| Antifungal activity^{y} | + | - | - | - | + |
| Autoinducer production | + | - | - | - | ++ |
| HCN production | + | + | + | + | + |
| Protease production | + | + | + | - | + |
| Chitinase production | + | + | + | - | + |
| Motility | + | + | + | + | + |
| Tomato root tip colonisation^{z} | + | + | + | + | + |

| | | | | | |
|---|---|---|---|---|---|
| ^{y}Activity was tested in a Petri dish assay for antifungal activity (Geels and Schippers 1983b) against *F. oxysporum* f.sp. *radicis-lycopersici* | | | | | |
| ^{z}Colonising ability was tested after seedling inoculation in competition with PCL1392, a "good-colonising" Tn5lacZ tagged derivative of PCL1391 not impaired in root colonisation, in a gnotobiotic sand system (Simons et al. 1996). +, wild-type level; +++++, tenfold increase;-, absent | | | | | |

### Legends to figures

Fig. 1. C18-reverse phase TLC analysis of *N*-acyl-L-homoserine lactones produced by *Pseudomonas chlororaphis* strain PCL1391 visualised using the *Chromobacterium violaceum* reporter assay. Lane 1:.synthetic BHL standard; lane 2: synthetic HHL standard; lane 3: synthetic OHL standard; lane 4: Autoinducer profile of strain PCL1391. It should be noted that the major spot visible in'lane 4 moved to exactly the same position as HHL when smaller amount of sample were applied.
Fig. 2. Structural identification of the major compound with autoinducer activity produced by *Pseudomonas chlororaphis* PCL1391 by mass spectrometry. Panel A. CID spectrum obtained from a 1.3 ng/µl standard solution of HHL. Insert: fragmentation scheme for HHL. Panel B. CID spectrum obtained from fraction with R_{f} 0.4 after HPLC purification.
Fig. 3. C18-reverse phase TLC analysis of *N*-acyl-L-homoserine lactones produced by *Pseudomonas chlororaphis* strain PCL1391 and derivatives. Autoinducer profile of Tn5 mutants of *Pseudomonas chlororaphis* strain PCL1391. Lane 1: PCL1391 wild type; lane 2: PCL1103 *(phzI::*Tn*5luxAB)*; lane 3: PCL1104 *(phzR::*Tn*5luxAB)*; lane .4: PCL1123 (*gacS*::Tn*5luxAB*); lane 5: PCL1111*(lexA::*Tn*5luxAB)*; lane 6: PCL1119 *(phzB::Tn5luxAB);* lane 7: synthetic HHL standard. A volume of 100 ml of three-day old KB culture supernatant of the strains was extracted with dichloromethane and tested in the *Chromobacterium* TLC overlay assay (See Experimental procedures).
Fig. 4. Chromosomal localisation, regulatory elements, and homology of genes regulating PCN production in *P. chororaphis* PCL1391. Panel A. Genetic analysis of mutants altered in PCN production of *Pseudomonas chlororaphis* strain PCL1391. Positions of the Tn*5luxAB* transposon of strains PCL1103, PCL1104, and PCL119 are indicated with arrows. In addition, the first two genes of the biosynthetic operon, *phzA* and *phzB* are shown. Sequences homologous to *lux*-boxes of *Photobacterium fisheri* were identified in the promoter region of the *phzI* and *phzA* genes. Panel B. Identification of sequences homologous to the *P. fisheri lux-box* in the *phzI* and *phzA* promoter regions. The *lux*-box is double underlined and the ATG start codons of *phzI* and *phzA* are indicated. Panel C. Tree of homology of the PhzI proteins of strain *P. aureofaciens* 30-84 *(P. aur.* Phzl), *P. fluorescens* 2-79 *(P. flu.* Phzl), *P. aeruginosa* PAO1. *(P. aer..* Phzl, Vsml, RhII, LasI), *P. syringae* pv. *syringae (P. syr. Ahll), P. fisheri* (P. *fis.* LuxI), *E. carotovora (E. car.* Expl, Carl), A. *tumefaciens (A. tum.* Tral), and *Rhizobium etli (R. etl.* Rail). Panel D. Tree of homology of the PhzR proteins of *P. aureofaciens* 30-84 *(P. aur.* PhzR), *P. fluorescens* 2-79 *(P. flu.* PhzR), *P. aeruginosa* PAO1 *(P. aer.* PhzR, VsmR, RhIR, LasR), *P. fisheri (P. fis.* LuxR), *E. carotovora (E. car.* ExpR), *A*.. *tumefaciens* (*A*. *tum.* TraR), and *Rhizobium etli (R. etl.* RaiR).
Fig. 5. Expression studies of the *phzI* gene, *phzR* gene, and the PCN biosynthetic operon of *Pseudomonas chlororaphis* strain PCL1391. Strains were grown in LB medium. HHL was added at the initial optical. density (OD₆₂₀) of 0.1. Values depicted in the panels are values for the luminescence measured in counts per seconds (cps) per cell density unit during growth in time. Panel A. Induction of *phzI* in strain PCL1103 *(phzI::*Tn*5luxAB)* in the absence and presence of 5 µM synthetic HHL. Panel B. Quantification of *phzR* expression in the absence and presence of 5 µM synthetic HHL using strain PCL1104 *(phzR::*Tn*5luxAB)*. Panel C. Expression of the PCN biosynthetic operon of strain PCL1119 *(phzR::*Tn*5luxAB)* in the absence and presence of 5 µM synthetic HHL. Panel D. Induction of *phzI* by synthetic HHL, by cell-free spent culture supernatant of strain PCL1103, by spent growth supernatant of strain PCL1119, and by a combination of spent growth supernatant of PCL1103 and HHL.
Fig. 6. Expression of the *phzI* gene, *phzR* gene, and the PCN biosynthetic operon of strain *Pseudomonas chlororaphis* PCL1391 in lexA and *gacS* mutant strains. Panels A-C. Expression studies of the *phzI, phzR,* and PCN biosynthetic genes in a gacS-deficient background using the *phzI::*Tn*5luxAB* (PCL1103), *phzR::*Tn*5luxAB* (PCL1104), and *phzB::*Tn*5luxAB* (PCL1119) reporters, respectively. Panels D-F. Expression of the *phzI, phzR,* and biosynthetic genes in a *lexA-*deficient background using the *phzI::*Tn*5luxAB* (PCL1103). *phzR::*Tn*5luxAB* (PCL1104), and *phzB::*Tn*5luxAB* (PCL1119) reporters, respectively. Bioluminescence was measured as described in the legend of Fig. 5.
Fig. 7. identification of sequences homologous. to the binding sites for LexA (SOS boxes) in the promoter region of *lexA* in *Pseudomonas chlororaphis* strain PCL1391.
FIG. 8. Influence of root exudate' components on expression of the PCN biosynthetic operon of *Pseudomonas chlororaphis.*
   *P. chlororaphis* strain PCL1119 *(phzB::*Tn*5luxAB)* was grown in modified Vogel-Bonner medium in which the indicated carbon sources were present. Panel A shows the maximal expression of the PCN biosynthetic operon. Panel B shows the expression of the PCN biosynthetic operon during growth in a selection of carbon and organic acids that show a clear elevation in expression as shown in panel A. Bioluminescence was detected as described in Materials and Methods.
FIG. 9. influence of limited and excessive amounts of metal ions in the growth medium on the expression of the PCN biosynthetic operon. *Pseudomonas chlororaphis* strain PCL1119 *(phzB::*Tn*5luxAB)* was grown in modified Vogel-Bonner medium as described in Materials and Methods. The middle concentration is the standard concentration in Vogel-Bonner medium. Selected metal ions were omitted or added in a tenfold or hundredfold increased concentration. Bioluminescence was detected as described in Materials and Methods.
FIG. 10. Effect of low oxygen tensions on *phzB* expression. *Pseudomonas* chlororaphis PCL1119 *(phzB::*Tn*5luxAB)* was grown under 21% (air) or 1.0% oxygen conditions. Bioluminescence was detected as described in Materials and Methods.
Fig. 11. Identification of phenazine-1-carboxamide in growth substrate and nutrient solution of cucumber seed-. lings. Fig. 11A shows the HPLC chromatogram (retention time of the peak indicated being 16.525 minutes). Fig. 11B shows the spectrum of the peak indicated in the chromatogram in Fig. 11A. Fig. 11C shows the spectrum of standard phenazine-1-carboxamide.

## Claims

1. Mineral wool plant substrate comprising mineral wool and bound to the mineral wool a bacterium producing a phenazine derivative having fungicidal activity, wherein the bacterium is genetically modified such that it comprises multiple copies of genes *phzR* and *phzI* resulting in an overproduction of the phenazine derivative.

2. Substrate according to claim 1, wherein the phenazine derivative is phenazine-1-carboxamide.

3. Substrate according to claim 2, wherein the bacterium comprises *Pseudomonas chlororaphis* PCL1391.

4. Substrate according to claim 3, wherein the bacterium comprises a genetically transformed *Pseudomonas chlororaphis* PCL1391 having a mutation in the lexa gene resulting in an overproduction of phenazine-1-carboxamide.

5. Substrate according to any of the preceding claims, wherein the substrate comprises a coherent matrix of mineral wool and bound to the matrix said bacterium.

6. Substrate according to any of the preceding claims, wherein the mineral wool is in granular form.

7. Use of a substrate as defined in any of claims 1-6 in the growth of crops, wherein the production of the phenazine derivative is increased by employing one or more of the f ollowing conditions:
- growth under low oxygen,
- the presence of glycerol, fructose, ribose or citric acid in the nutrient medium, and
- the presence of various minerals (Cu²⁺, Zn²⁺, Fe³⁺) in the nutrient medium.

8. A process for producing a mineral wool plant substrate as defined in any of claims 1-6, wherein the bacterium is added to the mineral wool plant substrate during production of said substrate.

9. A process according to claim 8, wherein the bacterium is admixed to mineral wool fibres and a curable binder to form a mixture, and said mixture is cured to form a coherent matrix.

10. A process for producing a mineral wool plant substrate as defined in any of claims 1-6, wherein the bacterium is added to a finished mineral wool plant substrate.

## Patentansprüche

1. Pflanzensubstrat aus Mineralwolle umfassend Mineralwolle und ein an der Minderalwolle gebundenes Bacterium, produzierend eine Phenazinableitung mit pilztötender Aktivität, wobei das Bacterium genetisch modifiziert ist, derartig daß es mehrfache Kopien von Genen phzR und phzl umfaßt, was in einer Überproduktion der Phenazinableitung resultiert.

2. Substrat nach Anspruch 1, wobei die Phenazinableitung Phenazin-1-Carboxamid ist.

3. Substrat nach Anspruch 2, wobei das Bacterium *Pseudomonas chlororaphis* PCL1391 umfaßt.

4. Substrat nach Anspruch 3, wobei das Bacterium ein genetisch transformiertes *Pseudomonas chlororaphis* PCL1391 umfaßt, mit einer Mutation in dem lexA Gen, was in einer Überproduktion von Phenazin-1-Carboxamid resultiert.

5. Substrat nach einem der vorhergehenden Ansprüche, wobei das Substrat eine kohärente Matrix von Mineralwolle und das an der Matrix gebundene Bacterium umfaßt.

6. Substrat nach einem der vorhergehenden Ansprüche, wobei die Mineralwolle in körniger Form ist.

7. Benutzung eines Substrats nach einem der Ansprüche 1-6 in dem Wachstum von Saaten, wobei die Produktion der Phenazinableitung zunimmt durch eine oder mehrere der nachfolgenden Bedingungen zu verwenden:
- Wachstum unter niedrigem Sauerstoffgehalt
- die Anwesenheit von Glycerol, Fructose, Ribose oder Zitronensäure in dem Nährstoffmedium, und
- die Anwesenheit von verschiedenen Mineralien (Cu²⁺, Zn²⁺, Fe³⁺) in dem Nährstoffmedium.

8. Verfahren zum Produzieren eines Pflanzensubstrats aus Mineralwolle nach einem der Ansprüche 1-6, wobei das Bacterium dem Pflanzesubstrat aus Mineralwolle während Produktion des Substrats zugefügt ist.

9. Verfahren nach Anspruch 8, wobei das Bacterium den Mineralwollefibern beigemischt ist und ein heilbares Bindemittel um eine Mischung zu bilden, wobei die Mischung ausgehärtet wird um eine kohärente Matrix zu bilden.

10. Verfahren zum Produzieren eines Mineralwolleplanzensubstrats nach einem der Ansprüche 1-6, wobei das Bacterium dem fertigen Pflanzensubstrat aus Mineralwolle zugefügt wird.

## Revendications

1. Substrat de laine minérale pour des végétaux comprenant de la laine minérale et, liée à la laine minérale, une bactérie produisant un dérivé de phénazine ayant une activité fongicide, dans lequel la bactérie est génétiquement modifiée de telle sorte qu'elle comprenne des copies multiples des gènes *phzR* et *phzI* résultant en une surproduction du dérivé de phénazine.

2. Substrat selon la revendication 1, dans lequel le dérivé de phénazine est du phénazine - 2 - carboxamide.

3. Substrat selon la revendication 2, dans lequel la bactérie comprend du *Pseudomonas chlororaphis* PCL1391.

4. Substrat selon la revendication 3, dans lequel la bactérie comprend un *Pseudomonas chlororaphis* PCL1391 modifié génétiquement ayant une mutation au niveau du gène *lexA,* résultant en une surproduction de phénazine - 1 - carboxamide.

5. Substrat selon l'une quelconque des revendications précédentes, dans lequel le substrat comprend une matrice cohérente de laine minérale et de ladite bactérie liée à la matrice.

6. Substrat selon l'une quelconque des revendications précédentes, dans lequel la laine minérale est sous la forme de granulés.

7. Utilisation d'un substrat selon l'une quelconque des revendications 1 à 6 pour faire pousser des végétaux, dans laquelle la production du dérivé de phénazine est augmentée par l'utilisation d'une ou de plusieurs des conditions suivantes :
- croissance en présence d'une faible quantité d'oxygène ;
- présence de glycérol, de fructose, de ribose ou d'acide citrique dans le milieu nutritif; et
- présence de divers minéraux (CU²⁺, Zn²⁺, Fe³⁺) dans le milieu nutritif.

8. Procédé de production d'un substrat de laine minérale pour des végétaux selon l'une quelconque des revendication 1 à 6, dans lequel la bactérie est ajoutée au substrat de laine minérale pour des végétaux pendant la production dudit substrat.

9. Procédé selon la revendication 8, dans lequel la bactérie est mélangée aux fibres de laine minérale et à un liant pouvant être cuit afin de former un mélange, ledit mélange étant cuit pour former une matrice cohérente.

10. Procédé de production d'un substrat de laine minérale pour les végétaux selon l'une quelconque des revendications 1 à 6. dans lequel la bactérie est ajoutée à un substrat de laine minérale pour les végétaux qui est un substrat fini.
